(19) **Europäisches Patentamt European Patent Office Office européen des brevets**

(11) **EP 4 128 963 B1**

(12) **EUROPEAN PATENT SPECIFICATION**

(45) Date of publication and mention of the grant of the patent:
**22.04.2026 Bulletin 2026/17**

(21) Application number: **21718300.3**

(22) Date of filing: **17.03.2021**

(51) International Patent Classification (IPC):
**H04W 64/00** *(2009.01)*    **H04W 88/02** *(2009.01)*
**H04W 88/08** *(2009.01)*

(52) Cooperative Patent Classification (CPC):
**H04W 64/00; H04W 88/02; H04W 88/08**

(86) International application number:
**PCT/US2021/022754**

(87) International publication number:
**WO 2021/194825 (30.09.2021 Gazette 2021/39)**

(54) **POSTPONED REPORTING OF AT LEAST ONE POSITIONING STATE INFORMATION (PSI) REPORT ELEMENT**

VERZÖGERTES MELDEN MINDESTENS EINES POSITIONIERUNGSZUSTANDSINFORMATIONS (PSI)-MELDEELEMENTS

RAPPORT DIFFÉRÉ D'AU MOINS UN ÉLÉMENT DE RAPPORT D'INFORMATIONS D'ÉTAT DE POSITIONNEMENT (PSI)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2020 GR 20200100157**

(43) Date of publication of application:
**08.02.2023 Bulletin 2023/06**

(73) Proprietor: **QUALCOMM INCORPORATED**
**San Diego, California 92121-1714 (US)**

(72) Inventors:
• **DUAN, Weimin**
  **San Diego, California 92121-1714 (US)**
• **MANOLAKOS, Alexandros**
  **San Diego, California 92121-1714 (US)**
• **CHEN, Wanshi**
  **San Diego, California 92121-1714 (US)**
• **MUKKAVILLI, Krishna Kiran**
  **San Diego, California 92121-1714 (US)**
• **JI, Tingfang**
  **San Diego, California 92121-1714 (US)**
• **BHUSHAN, Naga**
  **San Diego, California 92121-1714 (US)**

(74) Representative: **Reddie & Grose LLP**
**The White Chapel Building**
**10 Whitechapel High Street**
**London E1 8QS (GB)**

(56) References cited:
**US-A1- 2014 370 914    US-A1- 2019 059 101**

• **CHRISTIAN BERGER (MARVELL): "Immediate and Delayed Feedback in LMR", vol. 802.11az, no. 2, 18 July 2019 (2019-07-18), pages 1 - 5, XP068153284, Retrieved from the Internet <URL:https://mentor.ieee.org/802.11/dcn/19/11-19-1319-02-00az-immediate-and-delayed-feedback-in-lmr.docx> [retrieved on 20190718]**

EP 4 128 963 B1

**Description**

**CROSS-REFERENCE TO RELATED APPLICATIONS**

This application claims the benefit of Greek Patent Application No. 20200100157, entitled "METHODS AND APPARATUS FOR POSTPONING OF POSITIONING STATE INFORMATION REPORTS FOR POSITIONING," filed March 26, 2020.

**BACKGROUND OF THE DISCLOSURE**

*1. Field of the Disclosure*

Aspects of the disclosure relate generally to wireless communications and the like.

*2. Description of the Related Art*

Wireless communication systems have developed through various generations, including a first-generation analog wireless phone service (1G), a second-generation (2G) digital wireless phone service (including interim 2.5G networks), a third-generation (3G) high speed data, Internet-capable wireless service, and a fourth-generation (4G) service (e.g., Long-Term Evolution (LTE), WiMax). There are presently many different types of wireless communication systems in use, including cellular and personal communications service (PCS) systems. Examples of known cellular systems include the cellular Analog Advanced Mobile Phone System (AMPS), and digital cellular systems based on code division multiple access (CDMA), frequency division multiple access (FDMA), time division multiple access (TDMA), the Global System for Mobile access (GSM) variation of TDMA, etc.

A fifth generation (5G) mobile standard calls for higher data transfer speeds, greater numbers of connections, and better coverage, among other improvements. The 5G standard (also referred to as "New Radio" or "NR"), according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G / LTE standard. Furthermore, signaling efficiencies should be enhanced and latency should be substantially reduced compared to current standards.

US 2019/059101 describes systems, methods, and devices related to uplink location measurement report feedback. A device may perform availability window negotiation during a negotiation phase of a location determination associated with a first initiating device of one or more initiating devices.

US 2014/0370914 describes a method for reporting by a terminal in a wireless communication system. The method comprises: acquiring measurement results; starting to acquire location information related to the measurement results; determining whether measurement results satisfy reporting conditions; starting a delay timer; and if the location information is acquired before the delay timer expires, transmitting a reporting message comprising the measurement results and the acquired location information via a network.

**SUMMARY**

The invention is carried out according to the appended independent claims. Optional features of the invention are carried out according to the dependent claims.

**BRIEF DESCRIPTION OF THE DRAWINGS**

The accompanying drawings are presented to aid in the description of various aspects of the disclosure and are provided solely for illustration of the aspects and not limitation thereof.

FIG. 1 illustrates an exemplary wireless communications system, according to various aspects of the disclosure.

FIGS. 2A and 2B illustrate example wireless network structures, according to various aspects of the disclosure.

FIG. 3 illustrates a block diagram of a design of base station and user equipment (UE), which may be one of the base stations and one of the UEs in Fig. 1.

FIG. 4 is a diagram of a structure of an exemplary subframe sequence with positioning reference signal (PRS) positioning occasions.

FIG. 5 is a block diagram illustrating a UE and network entity configured to respectively transmit and receive on a lower layer channel a Positioning State Information (PSI) report with an indication of postponement of one or more PSI report elements, according to the disclosure herein.

FIG. 6 is a block diagram illustrating a UE and network entity configured to respectively transmit and receive on a lower layer channel a PSI report with an indication of postponement for different group types of PSI report elements, according to the disclosure herein.

FIG. 7 is a block diagram illustrating a UE configured to order and postpone transmission of low priority PSI report elements in a PSI report to be transmitted on a lower layer channel, according to the disclosure herein.

FIG. 8 is a message flow with various messages sent between components of a wireless communication system, illustrating the transmission of PSI report with indication(s) of postponement of one or more PSI report elements, according to the disclosure herein.

FIG. 9 is a flowchart for an exemplary method for wireless communications for a UE in which the UE transmits a PSI report on a lower layer channel with indication(s) of postponement of one or more PSI report elements in a manner consistent with the disclosed implementation.

FIG. 10 is a flowchart for an exemplary method for wireless communications for a UE in which a network entity receives a PSI report on a lower layer channel with indication(s) of postponement of one or more PSI report elements in a manner consistent with the disclosed implementation.

FIG. 11 is a schematic block diagram illustrating certain exemplary features of a UE enabled to transmits a PSI report on a lower layer channel with indication(s) of postponement of PSI report elements, according to the disclosure herein.

FIG. 12 shows a schematic block diagram illustrating certain exemplary features of a network entity enabled to support wireless communications with a UE to transmit a PSI report on a lower layer channel with indication(s) of postponement of PSI report elements, according to the disclosure herein.

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB or gNodeB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission point or to multiple physical transmission points that may or may not be co-located. For example, where the term "base station" refers to a single physical transmission point, the physical transmission point may be an antenna of the base station corresponding to a cell of the base station. Where the term "base station" refers to multiple co-located physical transmission points, the physical transmission points may be an array of antennas (e.g., as in a multiple-input multiple-output (MIMO) system or where the base station employs beamforming) of the base station. Where the term "base station" refers to multiple non-co-located physical transmission points, the physical transmission points may be a distributed antenna system (DAS) (a network of spatially separated antennas connected to a common source via a transport medium) or a remote radio head (RRH) (a remote base station connected to a serving base station). Alternatively, the non-co-located physical transmission points may be the serving base station receiving the measurement report from the UE and a neighbor base station whose reference RF signals the UE is measuring.

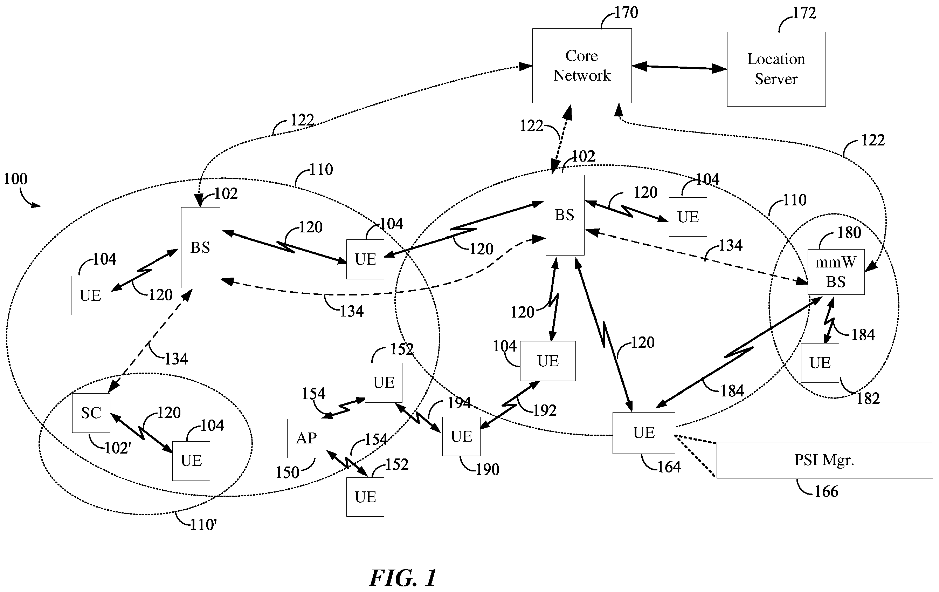

**FIG. 1** illustrates an exemplary wireless communications system 100. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164. In an aspect, the UE 164 may include a PSI manager 166 that may enable the UE 164 to perform the UE operations described herein. Note that although only one UE in FIG. 1 is illustrated as having a PSI manager 166, any of the UEs in FIG. 1 may be configured to perform the UE operations described herein.

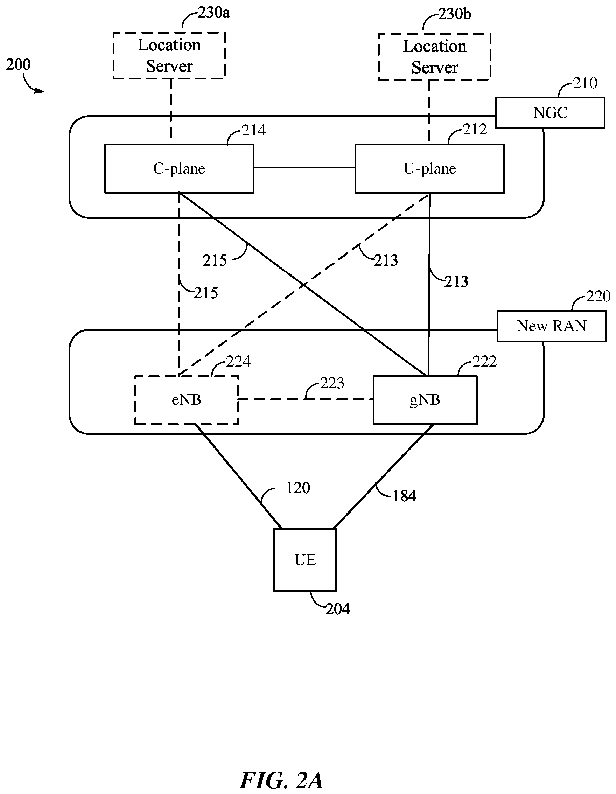

FIG. 2A illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1). Another optional aspect may include one or more location servers 230a, 230b (sometimes collectively referred to as location server 230) (which may correspond to location server 172), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

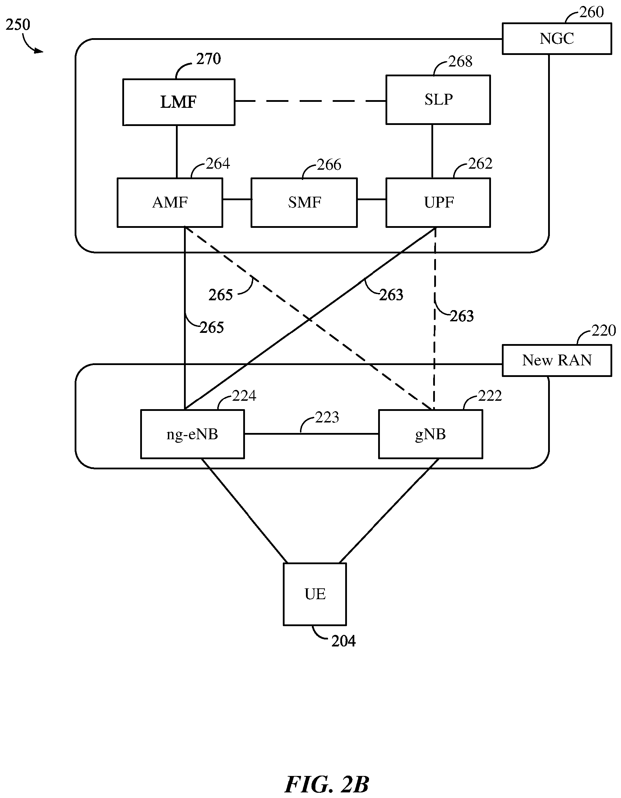

FIG. 2B illustrates another example wireless network structure 250. For example, an NGC 260 (also referred to as a "5GC") can be viewed functionally as control plane functions, provided by an access and mobility management function (AMF) 264, user plane function (UPF) 262, a session management function (SMF) 266, SLP 268, and an LMF 270, which operate cooperatively to form the core network (i.e., NGC 260). User plane interface 263 and control plane interface 265 connect the ng-eNB 224 to the NGC 260 and specifically to UPF 262 and AMF 264, respectively. In an additional configuration, a gNB 222 may also be connected to the NGC 260 via control plane interface 265 to AMF 264 and user plane interface 263 to UPF 262. Further, eNB 224 may directly communicate with gNB 222 via the backhaul connection 223, with or without gNB direct connectivity to the NGC 260. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). The base stations of the New RAN 220 communicate with the AMF 264 over the N2 interface and the UPF 262 over the N3 interface.

The functions of the AMF include registration management, connection management, reachability management, mobility management, lawful interception, transport for session management (SM) messages between the UE 204 and the SMF 266, transparent proxy services for routing SM messages, access authentication and access authorization, transport for short message service (SMS) messages between the UE 204 and the short message service function (SMSF) (not shown), and security anchor functionality (SEAF). The AMF also interacts with the authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 204 and the location management function (LMF) 270 (which may correspond to location server 172), as well as between the New RAN 220 and the LMF 270, evolved packet system (EPS) bearer identifier allocation for interworking with the EPS, and UE 204 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 266 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the NGC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, NGC 260, and/or via the Internet (not illustrated).

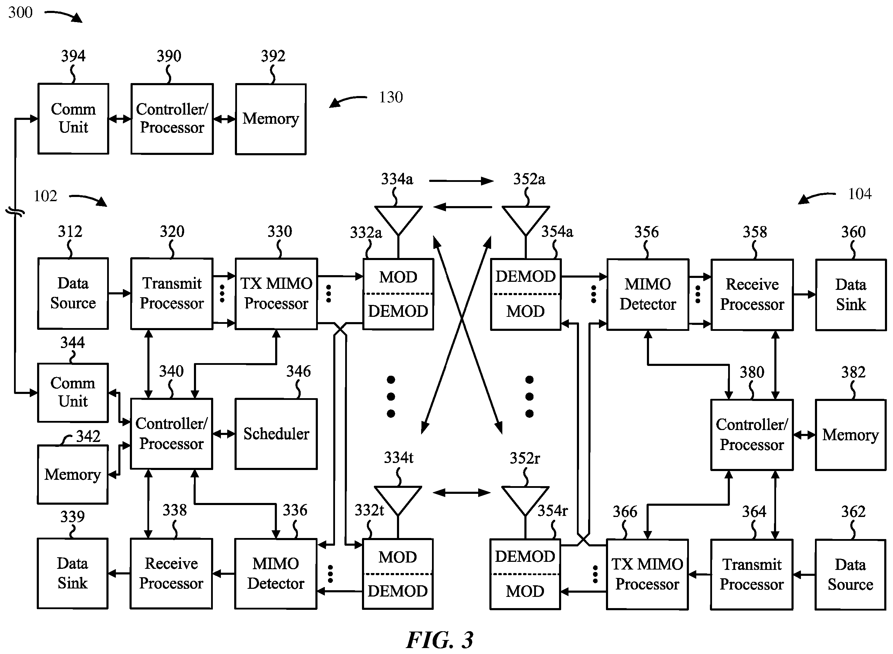

**FIG. 3** shows a block diagram of a design 300 of base station 102 and UE 104, which may be one of the base stations and one of the UEs in FIG. 1. Base station 102 may be equipped with T antennas 334a through 334t, and UE 104 may be equipped with R antennas 352a through 352r, where in general $T \geq 1$ and $R \geq 1$.

At base station 102, a transmit processor 320 may receive data from a data source 312 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 320 may also process system information (e.g., for semi-static resource partitioning information (SRPI) and/or the like) and control information (e.g., CQI requests, grants, upper layer signaling, and/or the like) and provide overhead symbols and control symbols. Transmit processor 320 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 330 may perform spatial processing (e.g., precoding) on the data symbols, the control symbols, the overhead symbols, and/or the reference symbols, if applicable, and may provide T output symbol streams to T modulators (MODs) 332a through 332t. Each modulator 332 may process a respective output symbol stream (e.g., for OFDM and/or the like) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively. According to various aspects described in more detail below, the synchronization signals can be generated with location encoding to convey additional information.

At UE 104, antennas 352a through 352r may receive the downlink signals from base station 102 and/or other base stations and may provide received signals to demodulators (DEMODs) 354a through 354r, respectively. Each demodulator 354 may condition (e.g., filter, amplify, down convert, and digitize) a received signal to obtain input samples. Each demodulator 354 may further process the input samples (e.g., for OFDM and/or the like) to obtain received symbols. A MIMO detector 356 may obtain received symbols from all R demodulators 354a through 354r, perform MIMO detection on the received symbols if applicable, and provide detected symbols. A receive processor 358 may process (e.g., demodulate and decode) the detected symbols, provide decoded data for UE 104 to a data sink 360, and provide decoded control information and system information to a controller/processor 380. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 364 may receive and process data from a data source 362 and control information (e.g., for reports comprising RSRP, RSSI, RSRQ, CQI, and/or the like) from controller/processor 380. Transmit processor 364 may also generate reference symbols for one or more reference signals. The symbols from transmit processor 364 may be precoded by a TX MIMO processor 366 if applicable, further processed by modulators 354a through 354r (e.g., for DFT-s-OFDM, CP-OFDM, and/or the like), and transmitted to base station 102. At base station 102, the uplink signals from UE 104 and other UEs may be received by antennas 334, processed by demodulators 332, detected by a MIMO detector 336 if applicable, and further processed by a receive processor 338 to obtain decoded data and control information sent by UE 104. Receive processor 338 may provide the decoded data to a data sink 339 and the decoded control information to controller/processor 340. Base station 102 may include communication unit 344 and communicate to location server 172 via communication unit 344. Location server 172 may include communication unit 394, controller/processor 390, and memory 392.

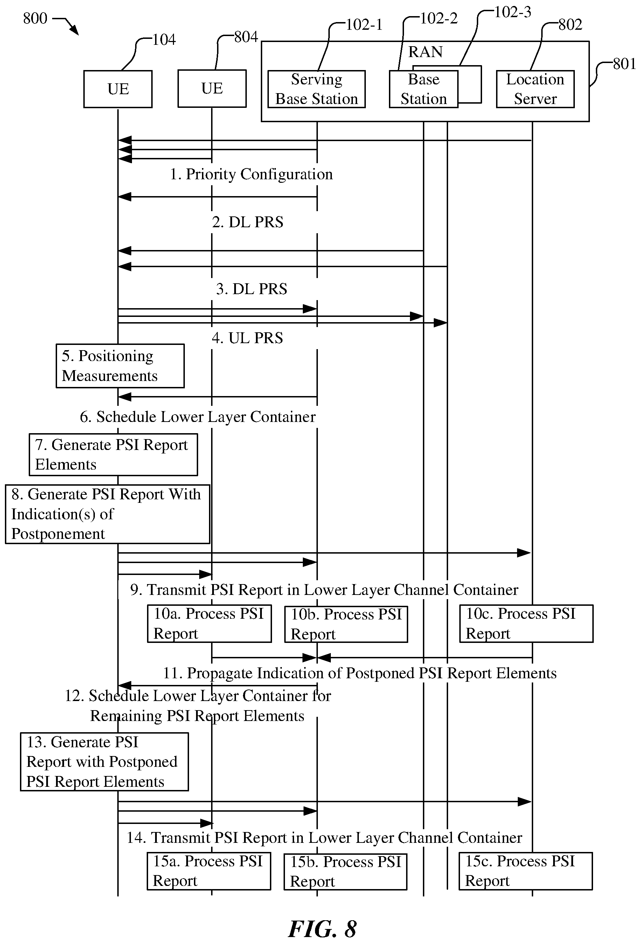

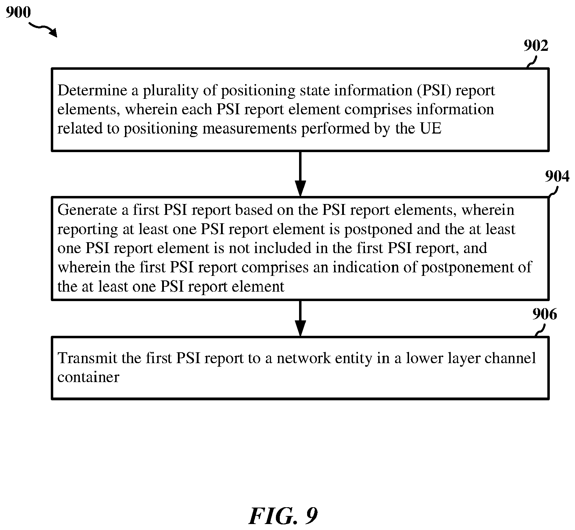

Controller/processor 340 of base station 102, controller/processor 380 of UE 104, and/or any other component(s) of FIG. 3 may perform one or more techniques associated with transmitting a positioning state information (PSI) on a lower layer channel and indicating whether the transmission of one or more PSI report elements is postponed, as described in more detail elsewhere herein. For example, controller/processor 340 of base station 102, controller/processor 380 of UE 104, and/or any other component(s) of FIG. 3 may perform or direct operations of, for example, process 800 of FIG. 8, process 900 of FIG. 9, and/or other processes as described herein. Memories 342 and 382 may store data and program codes for base station 102 and UE 104, respectively. In some aspects, memory 342 and/or memory 382 may comprise a non-transitory computer-readable medium storing one or more instructions for wireless communication. For example, the one or more instructions, when executed by one or more processors of the base station 102 and/or the UE 104, may perform or direct operations of, for example, process 800 of FIG. 8, process 900 of FIG. 9, and/or other processes as described herein. A scheduler 346 may schedule UEs for data transmission on the downlink and/or uplink.

As indicated above, FIG. 3 is provided as an example. Other examples may differ from what is described with regard to FIG. 3.

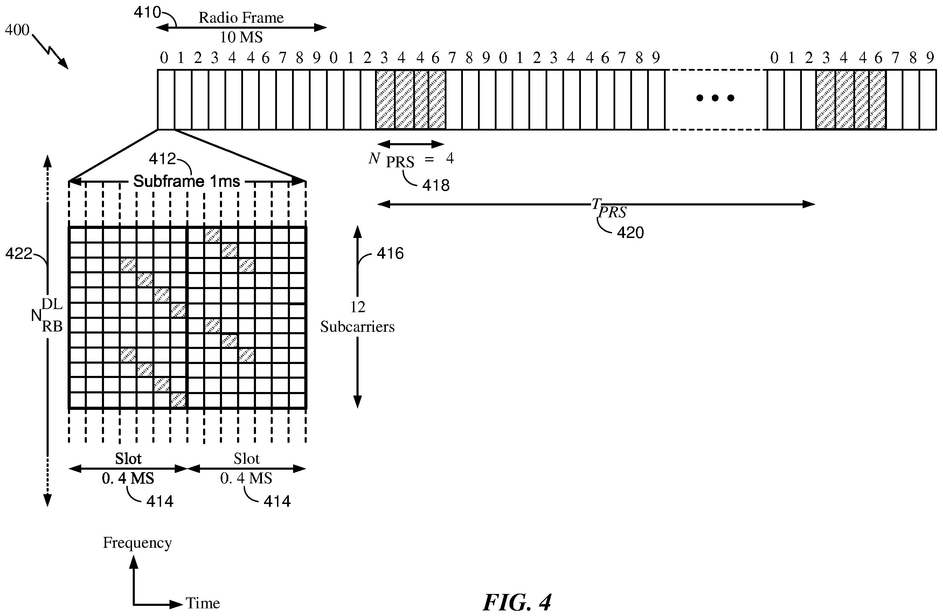

**FIG. 4** shows a structure of an exemplary subframe sequence 400 with positioning reference signal (PRS) positioning occasions, according to aspects of the disclosure. Subframe sequence 400 may be applicable to the broadcast of PRS signals from a base station (e.g., any of the base stations described herein) or other network node. The subframe sequence 400 may be used in LTE systems, and the same or similar subframe sequence may be used in other communication technologies / protocols, such as 5G NR. In FIG. 4, time is represented horizontally (e.g., on the X axis) with time increasing from left to right, while frequency is represented vertically (e.g., on the Y axis) with frequency increasing (or decreasing) from bottom to top. As shown in FIG. 4, downlink and uplink radio frames 410 may be of 10 millisecond (ms) duration each. For downlink frequency division duplex (FDD) mode, radio frames 410 are organized, in the illustrated example, into ten subframes 412 of 1 ms duration each. Each subframe 412 comprises two slots 414, each of, for example, 0.5 ms duration.

In the frequency domain, the available bandwidth may be divided into uniformly spaced orthogonal subcarriers 416 (also referred to as "tones" or "bins"). For example, for a normal length cyclic prefix (CP) using, for example, 15 kHz spacing, subcarriers 416 may be grouped into a group of twelve (12) subcarriers. A resource of one OFDM symbol length in the time domain and one subcarrier in the frequency domain (represented as a block of subframe 412) is referred to as a resource element (RE). Each grouping of the 12 subcarriers 416 and the 14 OFDM symbols is termed a resource block (RB) and, in the example above, the number of subcarriers in the resource block may be written as $N_{SC}^{RB} = 12$. For a given channel bandwidth, the number of available resource blocks on each channel 422, which is also called the transmission bandwidth configuration 422, is indicated as $N_{RB}^{DL}$. For example, for a 3 MHz channel bandwidth in the above example, the number of available resource blocks on each channel 422 is given by $N_{RB}^{DL} = 15$. Note that the frequency component of a resource block (e.g., the 12 subcarriers) is referred to as a physical resource block (PRB).

A base station may transmit radio frames (e.g., radio frames 410), or other physical layer signaling sequences, supporting PRS signals (i.e. a downlink (DL) PRS) according to frame configurations either similar to, or the same as that, shown in FIG. 4, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 4.

A collection of resource elements that are used for transmission of PRS signals is referred to as a "PRS resource." The collection of resource elements can span multiple PRBs in the frequency domain and N (e.g., 1 or more) consecutive symbol(s) within a slot 414 in the time domain. For example, the cross-hatched resource elements in the slots 414 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 4 illustrates a periodicity of positioning occasions where $N_{PRS}$ equals 4 418 and $T_{PRS}$ is greater than or equal to 20 420. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position $j$ is set to '0', then the UE may infer that the PRS is muted for a $j^{th}$ positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE/NR systems. However, as used herein, unless otherwise indicated, the terms "positioning reference signal" and "PRS" refer to any type of reference signal that can be used for positioning, such as but not limited to, PRS signals in LTE/NR, navigation reference signals (NRS), transmitter reference signals (TRS), cell-specific reference signals (CRS), channel state information reference signals (CSI-RS), primary synchronization signals (PSS), secondary synchronization signals (SSS), etc.

Similar to DL PRS transmitted by base stations, discussed above, a UE may transmit UL PRS for positioning. The UL PRS may be, e.g., sounding reference signals (SRS) for positioning. Using received DL PRS from base stations and/or UL PRS transmitted to base stations, the UE may perform various positioning methods, such as time of arrival (TOA), reference signal time difference (RSTD), time difference of arrival (TDOA), reference signal received power (RSRP), time difference between reception and transmission of signals (Rx-Tx), angle of arrival (AoA), or angle of departure (AoD), etc.

In some implementations, the DL PRS and UL PRS are received and transmitted jointly to perform multi-cell positioning measurements, such as multi-Round Trip Time (RTT).

Various positioning technologies rely on DL PRS or UL PRS (or SRS for positioning). For example, positioning technologies that use reference signal include downlink based positioning, uplink based positioning, and combined downlink and uplink based positioning. For example, downlink based positioning includes positioning methods such as DL-TDOA and DL-AoD. Uplink based positioning includes positioning method such as UL-TDOA and UL-AoA. Downlink and uplink based positioning includes positioning method, such as RTT with one or more neighboring base station (multi-RTT). Other positioning methods exist, including methods that do not rely on PRS. For example, Enhanced Cell-ID (E-CID) is based on radio resource management (RRM) measurements.

3GPP Release 16 addresses techniques for positioning with high accuracy, such as using a large bandwidth, beam sweeping in Frequency Range 2 (FR2) that includes frequency bands from 24.25 GHz to 52.6 GHz, angle-based positioning methods such as AoA and AoD, and multi- RTT. Latency, however, is not addressed in depth in Release 16. For example, it is agreed in Release 16 that "UE based positioning," such as DL based positioning, saves latency. Reporting in Release 16, however, is via LPP or RRC, using mechanisms similar to LTE, and does not provide for low latency reporting. For example, LPP and RRC share physical resources and include redundancies, which is advantageous in many aspects, but inherently increases latency.

Low latency, however, is desirable for positioning. For example, latency less than 100ms or less than 10ms in some Industrial Internet of Things (IIoT) cases, may be desirable. In order to reduce latency in positioning, reporting may be performed using lower layer channels, such as layer 1 (L1), which is PHYSICAL (PHY) layer, or layer 2 (L2), which is Medium Access Control (MAC) layer, as opposed to using higher latency LPP or RRC. Lower layer reporting, for example, may be used with on-demand positioning using special physical random access channel (PRACH) sequences. The use of lower layer (L1/L2) reporting to reduce latency is beneficial for communications between the UE 104 and the base station 102. Latency issues between the UE 104 and the LMF 270 may be addressed using additional mechanisms, such as "LMF in the RAN." With LMF in the RAN, the location server is within the same Technical Specification Group (TSG) Radio Access Network (RAN). For example, the location server may be an internal function of the NG-RAN node, the location server may be a logical node within the split gNB, or the location server may a logical node in the NG-RAN, connected to NG-RAN nodes (gNBs and/or ng-eNBs) via an interface, such that it can still receive the report from the UE

Positioning measurements, however, are currently reported through high layer signaling, e.g., via layer 3 (L3), which is RRC or LPP. For example, measurement reports that may be provided through high layer signaling include, e.g., RSTD, Rx-Tx, RSRP, velocity, positioning fix, one or multiple TOA, TDOA, RSRP per path, AoA/AoD, multipath reporting (e.g., for ToA, RSRP, AoA/AoD), LOS and NLOS, SINR, RSRP, motion states (e.g., walking, driving, etc.,) and quality, trajectories, etc.

It may be desirable to report positioning measurements, which are sometimes referred to herein as Positioning State Information (PSI) in a lower layer, e.g., L1/L2, to reduce latency. Positioning State Information may alternatively be referred to as CSI report for positioning, CSI report with positioning measurements, measurement location report, positioning measurement report, positioning information report, location information report, CSI report with location information. When reporting PSI with lower layer signaling, however, the size of the PSI report may be larger than the scheduled report container. If the PSI report does not fit within the report container, rather than dropping the entire PSI report, parts of the PSI report, e.g., one or more PSI report elements may be postponed from transmission in the PSI report.

In NR, Channel State Information (CSI) may be reported by a UE in a manner that lower priority information is omitted from the report. CSI is not related to positioning but provides a mechanism through which a UE reports various measured radio channel quality parameters to a network, e.g., gNB. A UE may be configured with a CSI report setting that contains, e.g., which parameters need to be reported. For example, a CSI report may include several different radio channel parameters, such as Channel Quality Indicator (CQI), Pre-coding Matrix Indicator (PMI), Rank Indicator (RI), Layer Indicator (LI), L1-RSRP. The CSI report setting may include resource set (RS) settings. For example, each resource setting has a BWP (bandwidth part) index, and a tag whether the CSIRS resources are aperiodic/periodic/semi-persistent. Each resource setting contains one or multiple CSI-RS/SSB resource set: for L1-RSRP: there is only one CSI-RS/SSB resource set; for CSI estimation: there may be two or three CSI-RS resource sets, where one is for channel measurement, the remaining are for interference measurements. Each CSI-RS resource set may contain one or multiple CSI-RS resources. For example, each CSI-RS resource may contain one or multiple antenna ports over which the UE may perform the measurement. If a set has multiple CSI-RS resources, the UE may report CRI, e.g., the best CSI-RS resource of the set. The CSI report setting may further include which UL channel should carry the report, e.g., physical uplink shared channel (PUSCH) or physical uplink control channel (PUCCH).

The interpretation of some fields may depend on values of other fields and the CSI report consists of a set of fields in a pre-specified order. A single UL transmission, e.g., on PUSCH or PUCCH may contain multiple reports that are arranged according to a priority, e.g., as defined 3GPP TS 38.214, which may depend on report periodicity, e.g., aperiodic, semi-persistent, periodic over PUSCH/PUCCH; type, e.g., L1-RSRP or not; serving-cell index, e.g., in a carrier aggregation case, and reportconfigID.

CSI may be reported in two parts, e.g., 2-part CSI reporting. With 2-part CSI presorting, the first part (part1) of all reports are collected together and the second part (part2) are separately collected, and each collection is separately encoded. The part 1 payload size is based on configuration parameters, while the part2 payload size depends on configuration and on the part1 contents. The number of coded bits/symbols to be output after encoding and rate matching is computed based on number of input bits and beta factors, e.g., defined in 3GPP TS 38.212. Further, linkages are defined between instances of resource sets (RS) being measured and corresponding reporting.

For PUSCH-based CSI reporting and Type II CSI reporting in particular, the CSI payload size may vary dramatically depending on the RI selection. For instance, for Type II reporting, the PMI payload for RI=2 is almost double to that of RI=1. Since the RI selection is not known to the gNB prior to scheduling an aperiodic CSI report on the PUSCH, the gNB will allocate PUSCH resources (i.e., in frequency and time domain) using a best guess of the RI selection the UE will make, e.g., perhaps by looking at historic RI reports. Thus, it is possible that the gNB may allocate PUSCH resources with the assumption that the UE will report RI=1, but the UE actually reports RI=2, which has almost twice the PMI payload size as RI=1. In that case, it is possible that the CSI payload will not fit in the PUSCH container, i.e., the code rate will be too large or even the un-coded systematic bits will not fit. Instead of dropping the entire CSI report, if the CSI payload will not fit in the PUSCH container, partial CSI omission may be used, where a portion of the CSI is omitted from the report, but the remaining position of the CSI is reported, e.g., which may provide some utility to the gNB and at least give information about the RI selection so that the gNB can allocate a proper PUSCH resource for the next aperiodic CSI request.

The CSI contents in CSI Part2 may be ordered in a predetermined fashion. For example, if multiple CSI reports are transmitted in the PUSCH, the wideband CSI components (i.e. the wideband PMI and CQI) for all the reports are mapped to the most significant bits of the Uplink Control Information (UCI). Then, the subband CSI for each report is mapped according to the priority rules, where the subband CSI for even numbered subbands are mapped first, followed by subband CSI for the odd numbered subbands. If the resulting code rate of the UCI is above a threshold, a portion of the least significant UCI bits are omitted, until the code rate falls below the threshold. Consequently, subband CSI for odd numbered subbands for a report will be omitted before the corresponding subband CSI for even numbered subbands. If the subband CSI for odd numbered subbands is omitted, the gNB will still receive subband PMI and CQI information for even number subbands in the frequency domain and can therefore interpolate the PMI/CQI between two reported subbands to try to estimate the missing PMI/CQI values for the odd numbered subbands in the middle.

Positioning state information (PSI) is different than CSI, as the type of information for positioning measurements included in a PSI report may vary greatly depending on the type of positioning measurement performed, the number of positioning measurements, the type of positioning method being supported, etc. For example, the number of TRPs that a UE may detect or report for positioning depends on the UE's selection, availability to measure PRS, etc.

The types of positioning measurements or information that may be included in a PSI report may include, e.g., timing measurements, such RSTD, UE Rx-Tx, TOA, etc., energy or power measurements, such as RSRP, angle measurements, such as RSRP, quality metrics, velocity and/or trajectory measurements, reference TRP, multipath information, line of sight (LOS) or non-line of sight (NLOS) factors, signal to interference noise ratio (SINR), and time stamps. It should be understood that this list is not exhaustive, and that other types of positioning measurements or information may be desirable to include in a PSI report. Each positioning measurements may be reported as one or more vectors, e.g., each vector being a set of one or more measurements associated with a same timestamp. Thus, for example, an RSTD vector may be indicated as {RSTD1, RSTD2 ... RSTDN) which are all associated with a timestamp1, and may be from the same or different TRPs, since there is the case that the UE reports multiple RSTDs for the same TRPs. Accordingly, a PSI report may include a variety of different types of positioning measurement vectors, which may include: RSTD vector and time-stamp, UE Rx-Tx vector and time-stamp, RSRP vector and time-stamp, Quality Metric vector and time-stamp, Velocity vector and time-stamp, TOA vector and time-stamp, Multipath vector and time-stamp, LOS/NLOS vector and time-stamp, SINR vector and time-stamp.

As discussed above, it may be desirable to report PSI on a lower layer (L1/L2) uplink channel, e.g., on a physical layer (PUSCH or PUCCH), on a MAC layer (Medium Access Control - Control Element (MAC-CE) block), or a physical sidelink discovery control channel (PSSCH). The PSI report may contain one or multiple types of positioning measurements and one or multiple sets of teach type of positioning measurement. The size of a report for the positioning measurements may vary, e.g., based on the UE selection or determination of positioning measurements or reporting configuration. A PSI report may be split into two or more parts, with a subset of parts having a constant size, and the remaining parts having variable size. The size of the varying subset of parts may vary, for example, because the UE 104 may detect fewer TRPs than expected or the UE may report only a subset of expected measurements, e.g., the UE may only report RSTD and not RSRP, even if the UE is configured to report both.

Because at least a portion of the PSI report may vary in size, the PSI payload may not fit in a channel container scheduled for the PSI report, e.g., in the PUSCH, PUCCH, PSSCH, or MAC-CE, i.e., the code rate will be too large or even the un-coded systematic bits will not fit.

A PSI report on a lower layer UL or sidelink (SL) data channel, e.g. PUSCH or PSSCH, the PSI payload size may vary dramatically depending on UE's selection, determination, and reporting configuration. For example, a PSI report may be split in two or more parts, such that a subset of the parts is constant size, and the remaining parts are variable size. The size of a subset of the parts may change because, for example, the UE may detect fewer TRPs than expected, or the UE may report fewer measurements, e.g., the UE may report RSTD but not RSRP, than configured.

A serving base station may not know information related to the size of the payload of a PSI report, such as the positioning methods or the number of detected TRPs, prior to scheduling an aperiodic PSI report on a lower layer. In this instance, the serving base station may have to allocate a lower layer resource, i.e. in frequency and time domain, using a best guess of the needed payload size. For example, the serving base station may use historic PSI reports from a UE to predict the payload size of a future PSI report. Accordingly, the serving base station may allocate lower layer resources based on an assumption that the UE will report the same quantity of PSI as a previous PSI report. However, the payload size for the previous PSI report may not be big enough for current PSI report. In that case, the PSI payload will not fit in the lower layer container, i.e., the code rate will be too large or even the un-coded systematic bits will not fit.

As discussed above, CSI report introduces a schemes of partial CSI omission, where a portion of the CSI may be reported, which may provide some utility to the serving base station and provide information about the RI selection so that the serving base station may allocate a proper PUSCH resource for the next aperiodic CSI request. However, using the idea of partial CSI omission for PSI, i.e., omitting a portion of PSI from the PSI report, may cause large performance loss with respect to positioning. For example, in a previous PSI report from a UE, there may be only 3 base stations configured for positioning, while in the current PSI report there may be 20 base stations configured for positioning. If the measured PSI from the additional 17 base stations are omitted from the PSI report due to the limited payload size of the allocated lower layer channel, which is allocated for the PSI measured for 3 base stations, the performance gain of the additional 17 base stations would be lost.

Accordingly, a postponing scheme for PSI reports may be used when the payload size for a PSI report does not fit in the allocated lower layer container. For example, the UE 104 may postpone the reporting of one or more PSI report elements (sometimes referred to herein as postponed PSI report elements) when all of the PSI report elements to be reported do not fit in the allocated lower layer container, e.g., in the PUSCH, PUCCH, PSSCH, or MAC-CE. Thus, the postponed PSI report elements are not included in the PSI report that is transmitted to the network entity, but may be included in a subsequent PSI report transmitted to the network entity.

In one implementation, the UE 104 may provide an indication of postponement in the PSI report indicating whether any PSI report elements were postponed and were not included in the PSI report. The indication of postponement, in other words, indicates whether the PSI report is complete or incomplete. The UE 104, for example, may indicate whether any PSI report elements are postponed and not included in the PSI report using a single bit in the PSI report. For example, the indication of postponement may be provided in the PSI report using the first bit of the payload, e.g., where a "1" indicates the PSI report is complete and "0" indicates the PSI report is incomplete, i.e., the transmission of at least one PSI report element has been postponed. In another example, the indication of postponement may be provided using the last bit of the payload in the PSI report. As examples, indication of postponement may be the first or last bits of the first part of the PSI report having a constant size, or the first or last bits of the second part of the PSI report having a variable size.

If the transmission of one or more PSI report elements is postponed, the UE 104 may additionally provide an indication in the PSI report of which PSI report elements are being postponed. For example, if some PSI report elements are not included in the current report, the UE 104 may assume these PSI report elements are not simply omitted, i.e., not to be sent, but are postponed, i.e., are to be sent at a later time. Thus, the UE 104 may wait for a new grant from a serving base station to send the postponed PSI report elements in a later PSI report. In some implementations, e.g., if there are a number of postponed PSI report elements, multiple subsequent PSI reports may be required to transmit all of the postponed PSI report elements.

Thus, the UE 104 may indicate if one or more PSI report elements are postponed and may additionally indicate which PSI report elements are postponed. The UE 104 may reserve enough bits in the current PSI report, e.g., either in the first part of the PSI report having a constant size or the second part of the PSI report having a variable size, to indicate which PSI report elements are not reported in current PSI report. These information bits may have higher priority and may be reserved for the purpose of indicating postponed PSI report elements.

The indication of the postponed PSI report elements may be used by the serving base station to determine the size of a lower layer container to grant the UE 104 for a subsequent PSI report that includes the postponed PSI report elements.

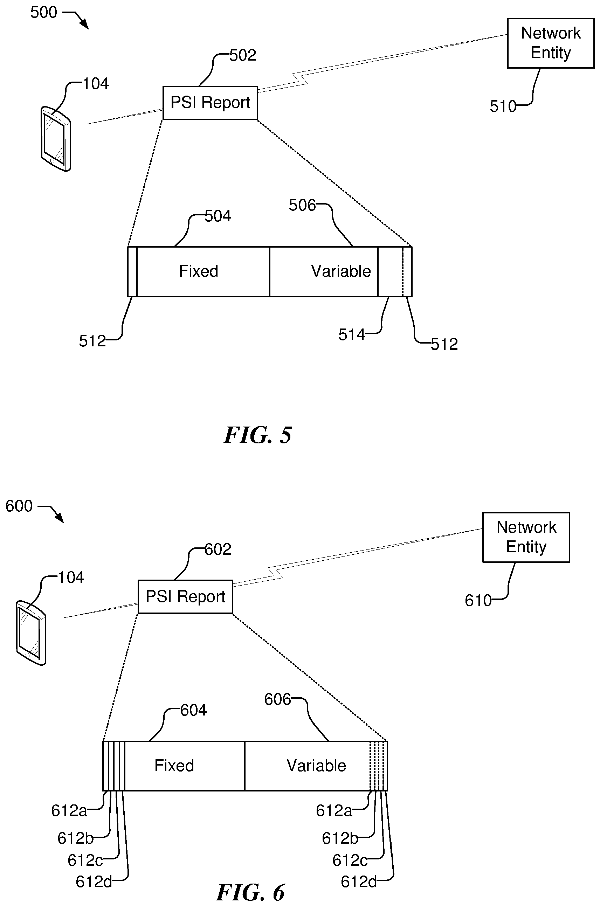

FIG. 5 is a block diagram 500 illustrating a UE 104 and network entity 510 configured to respectively transmit and receive on a lower layer channel a PSI report 502 with an indication of postponement of one or more PSI report elements, according to an aspect of the present disclosure. As illustrated in FIG. 5, the UE 104 may transmit a prepared PSI report 502 to a network entity 510. The network entity 510 that receives the PSI report may be, e.g., a base station, such as base station 102 or a location server such as location server 172 or LMF 270, or a sidelink UE.

The PSI report may be transmitted on a lower layer (L1/L2) uplink channel, e.g., on a physical layer (PUSCH or PUCCH), on a MAC layer (Medium Access Control - Control Element (MAC-CE) block), or a physical sidelink shared control channel (PSSCH). The size of a PSI report may vary depending on numerous factors, such as the type of positioning measurement vectors, the number of positioning measurements, the number of TRPs selected or available, etc. Because at least a portion of the PSI report may vary in size, the PSI payload may not fit in a channel container scheduled for the PSI report, e.g., in the PUSCH, PUCCH, PSSCH, or MAC-CE, i.e., the code rate will be too large or even the un-coded systematic bits will not fit.

Accordingly, the PSI report 502 may be complete, i.e., the PSI report 502 may contain all of the PSI report elements generated by the UE 104, or may be incomplete, i.e., the PSI report 502 may not contain all of the PSI report elements generated by the UE 104. For example, if all of the PSI report elements will not fit within the channel container scheduled for the PSI report 502, the UE 104 may postpone reporting one or more of the PSI report elements.

The UE 104 may provide an indication of postponement 512 in the PSI report 502. The indication of postponement 512 may be, for example, a single bit, sometimes referred to as a completeness bit that indicates whether the PSI report 502 is complete or incomplete. An indication that the PSI report 502 is incomplete indicates that there are postponed PSI report elements that are not included in the PSI report 502.

The PSI report 502 may further include an indication of postponed PSI report elements 514, which may indicate which PSI report elements are not included in the PSI report 502 and are to be reported later. The indication of postponed PSI report elements 514, for example, may identify types of positioning measurements or information that may is not included in the PSI report, which include, e.g., timing measurements, such RSTD, UE Rx-Tx, TOA, etc., energy or power measurements, such as RSRP, angle measurements, such as RSRP, quality metrics, velocity and/or trajectory measurements, reference TRP, multipath information, LOS or NLOS factors, SINR, and time stamps. Additionally, in some implementations, the indication of postponed PSI report elements 514 may indicate the quantity of postponed PSI report elements.

As illustrated in FIG. 5, the PSI report 502 may be divided into two or more parts, with a subset of parts having a constant size, and the remaining parts having variable size. For example, as illustrated in FIG. 5, a first part 504 of the PSI report 502 includes PSI report elements or information having a fixed size and a second part 506 of the PSI report 502 includes PSI report elements that may have variable size. In some implementations, the UE 104 may include in the first part 504 of the PSI report 502 reporting information that does not change in size independent of what the UE reports, e.g., reporting configuration of what is included in part 2. For example, the first part 504 may include an indication of the type of positioning measurement vectors included in the second part 506 and may also indicate the size of each positioning measurement vector.

The indication of postponement 512 may be included in the first part 504 or the second part 506 of the PSI report. For example, the indication of postponement 512 may be the first bit in the first part 504, or the last bit in the second part 506. If desired, the indication of postponement 512 may be located elsewhere in the PSI report 502, such as the last bit in the first part 504, or the first bit in the second part 506. The indication of postponed PSI report elements 514 is illustrated as being included in the second part 506 of the PSI report, but may be included elsewhere in the PSI report 502 if desired.

In another implementation, the UE 104 may provide in the PSI report an indication of postponement for different group types of measurements. An incomplete PSI report, for example, may affect performance for some specific types of measurement more than others. For example, for RSTD measurements where 16 RSTD measurements were made by the UE 104, if the PSI report includes only 4 RSTD measurement and the UE position is determined using only the 4 RSTD measurements, there may be a performance loss compared to delaying the position determination until the postponed RSTD measurements are provided and the position is determined using all 16 RSTD measurements. Other types of position measurements or information, however, may not have a large performance impact even if the corresponding report is incomplete, and thus, delay of the position determination until the postponed PRS reports are transmitted may not be necessary.

Accordingly, the indication of postponement in the PSI report may be provided per group types of PSI report elements. For example, the PSI report may indicate, e.g., with a single bit, if timing measurements are postponed. The PSI report may further indicate, e.g., with different bits, if power based positioning measurements (e.g., RSRP) are postponed, and/or if angle based measurements are postponed. Another example of a group type that may be postponed is one or more types of information, such as one or more quality metrics, velocity and/or trajectory measurements, reference TRP, multipath information, line of sight (LOS) or non-line of sight (NLOS) factors, signal to interference noise ratio (SINR), and timestamps. The PSI report may indicate if the reporting of different types of information is postponed, such as if Quality metrics, multipath reporting, etc.

FIG. 6, for example, is a block diagram 600 illustrating a UE 104 and network entity 610 configured to respectively transmit and receive on a lower layer channel a PSI report 602 with an indication of postponement 612a, 612b, 612c, 612d (collectively 612) for different group types of PSI report elements, according to an aspect of the present disclosure. The PSI report 602 may include different fields, e.g., bits, to indicate whether different group types of PSI report elements are postponed. For example, the first part 604, i.e., the fixed portion of the PSI report 602, may identify different types of PSI report elements, e.g., positioning measurement vectors or information, as a bit string of X bits, where each bit corresponds to a specific type PSI report element and may indicate the PSI report 602 is complete with respect to this particular type of PSI report element with a "1," i.e., the PSI report includes all available information for this group type, or the PSI report 602 is incomplete with respect to this particular type of PSI report element with a "0," i.e., the PSI report 602 does not include all available information for this group time. Additionally, X numbers may also be reported in the first part 504, where each number corresponds to the size of each postponed PSI report element. As illustrated, the indication of postponement 612 for different group types of PSI report elements may be located elsewhere in the PSI report 602, such as the end of the second part 606 or other locations, if desired.

When one or more PSI report elements are postponed and, thus, the PSI report is incomplete, the PSI report may still provide partial information that may be used for positioning. For example, a position may be determined for the UE 104 using PSI report elements that are included in a current PSI report. Postponed PSI report elements if and when received in a later PSI report, may be used to revise the position determination. Accordingly, it may be advantageous to improve latency, e.g., to provide higher priority PSI report elements as soon as possible and postpone transmission of lower priority PSI report elements.

Accordingly, the PSI report elements may be ordered in a predetermined fashion, e.g., according to priority base rules, and the transmission of the lower priority PSI elements may be postponed, while higher priority PSI report elements are included in the PSI report. For example, the PSI report elements may be mapped to the channel container according to the priority rules, where higher priority PSI report elements are mapped first, followed by successively lower priority PSI report elements. If the resulting code rate of the PSI report is above a threshold, e.g., based on the size of the channel container, the lowest priority PSI report element is excluded from the current PSI report, until the code rate falls below the threshold. Thus, the transmission of the excluded lower priority PSI report elements is postponed. The network entity that receives the PSI report may process the PSI report according to the priority base rules to obtain the PSI report elements. In some implementations, the serving base station may schedule one or more lower level channel containers for additional PSI reports that can include postponed PSI report elements. The position of the UE 104 may be determined based on the initial PSI report and, in some implementations, revised based on subsequent PSI reports, or may be determined after all of the PSI reports have been received.

Types of positioning measurements or information that may be included in a PSI report includes, e.g., timing measurements, such RSTD, UE Rx-Tx, TOA, etc., energy measurements, such as RSRP, quality metrics, velocity and/or trajectory measurements, reference TRP, multipath information, line of sight (LOS) or non-line of sight (NLOS) factors, signal to interference noise ratio (SINR), and time stamps. It should be understood that this list is not exhaustive, and that other types of positioning measurements or information may be desirable to include in a PSI report. Each positioning measurements may be reported as one or more vectors, e.g., each vector being a set of one or more measurements associated with a same time. Thus, for example, an RSTD vector may be indicated as {RSTD1, RSTD2 ... RSTDN) which are all associated with a timestamp1, and may be from the same or different TRPs, since there is the case that the UE reports multiple RSTDs for the same TRPs.

The priority based rules may be configurable, e.g., by the base station or the UE or may be static, e.g., stored in memory in the UE and a network entity that receives the PSI report. Examples of the priority based rules for ordering the PSI report elements, may include one or more of the following.

Rule 1: A first type of positioning measurement has higher priority than a second type of positioning measurement. In one implementation, for example, timing measurements may have a higher priority than energy measurements. For example, RSTDs across TRPs may have priority over the RSRPs across TRPs, or UE Rx-Tx across TRPs may have priority over the RSRPs across TRPs. Moreover, one type of timing positioning measurement may have priority over another type of timing positioning measurement, e.g., RSTDs across TRPs have priority over the UE Rx-Tx across TRPs. Similarly, one type of energy positioning measurement may have priority over another type of energy positioning measurement.

Rule 2: Quality metrics may have a lower priority compared to the positioning measurement to which they refer. For example, the UE 104 may first order the positioning measurements vectors followed by the quality metric vector. For example, if the UE 104 is to report ten RSTD vectors with associated quality metric vectors, the UE 104 may order the report as: RSTD1, RSTD2, ... RSTD10, Quality1, Quality2, ...Quality10.

Rule 3: A serving base station, e.g., TRP (or reference TRP) measurement has priority over the neighboring TRPs measurements. For example, when reporting ten TOA measurements, the UE 104 may report TOA1, TOA2, ... TOA10, where the first TOA measurement, e.g., "TOA1," corresponds to the serving or reference TRP.

Rule 4: The identifier for the reference base station (TRP), PRS resource, or PRS resource set has a higher priority than all positioning measurements. Thus, the identifier for the TRP, PRS resource or PRS resource that the UE selects as a reference is reported before any positioning measurements.

Rule 5: Priority of a PSI reporting element is based on the configured positioning method. For example, if the UE 104 is configured for TDOA, then RSTD positioning measurements have higher priority than RSRP measurements. If the UE 104 is configured for AoD, then an RSRP positioning measurements have higher priority than RSTD measurements. If the UE 104 is configured for multi-RTT, then Rx-Tx positioning measurements have a higher priority than RSRP measurements. The priority may be further based on multiple positioning methods, e.g., if the UE 104 is configured for hybrid positioning methods. For example, if the UE 104 is configured for TDOA and multi-RTT, then an RSTD positioning measurement may have a higher priority than Rx-Tx measurements.

Rule 6: The multipath reporting or the LOS/NLOS determination factors have a lower priority than the first-path reporting. Examples of first path reporting for example, may include RSTD, UE Rx-Tx, RSRP, and examples of multi-path reporting may include the difference between second path positioning measurement with respect to the first path positioning measurement. Thus, the UE 104 may order the PSI reporting elements with all RSTD, Rx-Tx, RSRP vectors, then, the quality metrics (if Rule 2 is applied), and then the multi-path reporting.

Rule 7: The UE may receive the configuration of the priority rules for each positioning measurement type. The configuration, for example, may be received from the location server, e.g., LMF 270, or the serving gNB or TRP, or from a sidelink UE. For example, the UE 104 may receive a configuration with the order the positioning measurement types.

Rule 8: When the UE 104 reports a positioning measurement vector, the corresponding time-stamp is reported with the positioning measurement vector. For example, if the UE 104 is reporting an RSTD vector and an RSRP vector and their timestamps, the UE 104 may report RSTD1, RSTD2, ... RSTD10, TimeStampRSTD, RSRP1, RSRP2, ..., RSRP10, TimeStampRSRP.

Rule 9: Measurement vectors from different types of positioning measurements are interleaved. For example, if the UE 104 is expected to report two RSTD vectors (e.g., from two different frequency layers), and one Rx-Tx vector, the vectors from the different type of positioning measurements are interleaved, e.g., RSTD vector1, Rx-Tx vector1, RSTD vector2.

Rule 10: The UE 104 may determine the order configuration of the positioning measurement types and report the order configuration with the PSI report. The order configuration may be reported, e.g., in a first part of the report having a fixed size.

In some implementations, all of the above rules may be used together. In other implementations, only a subset of rules may be used. As an example, the UE 104 may order PSI report elements based on the priority based rules such as those described above as shown in the following table, where priority 0 is the highest priority and priority 9 is the lowest priority.

TABLE 1

| |
| --- |
| Priority 0<br>Reference TRP, and/or |
| Priority 1<br>One or more RSTD vector(s) and their timestamps, and/or |
| Priority 2<br>One or more UE Rx-Tx vector(s) and their timestamps, and/or |
| Priority 3<br>One or more RSRP vector(s) and their timestamps, and/or |
| Priority 4<br>One or more Quality Metrics, and/or |
| Priority 5<br>One or more velocity vector(s) and their timestamps, and/or |
| Priority 6<br>One or more TOA vector(s) and their timestamps, and/or |
| Priority 7<br>One or more multipath vectors and their timestamps, and/or |
| Priority 8<br>One or more LOS/NLOS factors and their timestamps, and/or |
| Priority 9<br>One or more SINR |

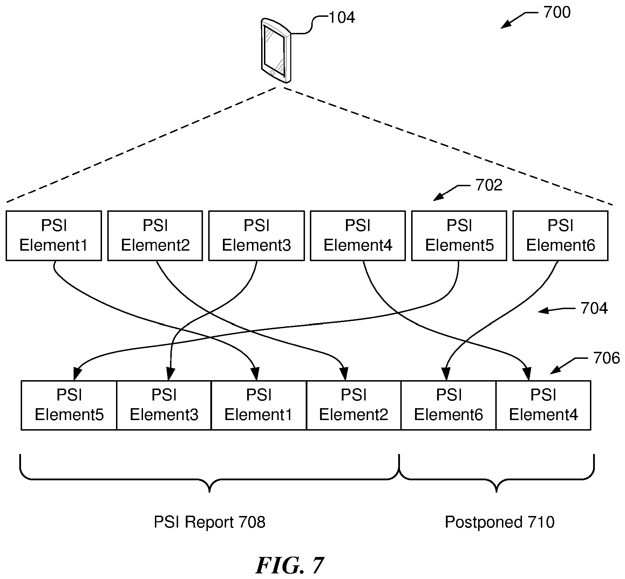

**FIG. 7** is a block diagram 700 illustrating a UE 104 configured to order and postpone transmission of low priority PSI report elements and to include the higher priority PSI report elements in a PSI report to be transmitted on a lower layer channel according to one aspect of the present disclosure. As illustrated, the UE 104 may determine a plurality of PSI report elements 702. Each PSI report element, for example, includes information related to positioning measurements performed by the UE 104. As discussed above, a PSI report element may include, e.g., RSTD vector(s), UE Rx-Tx vector(s), RSRP vector(s), positioning measurement quality metrics, velocity vector(s), reference TRP, TOA vector(s), multipath vectors, LOS/NLOS factors, SINR vector(s), or time-stamp(s). As illustrated by arrows 704, the PSI report elements are ordered by the UE 104 according to priority based rules, such as the rules discussed above, resulting in ordered PSI elements 706, with highest priority PSI report elements shown on the left, and lowest priority PSI report elements shown on the right. In the present example, the size of the ordered PSI report elements is larger than a lower layer channel container, e.g., a PUSCH, PUCCH, or PSSCH, or in a MAC-CE, in which the PSI report is to be transmitted. Accordingly, the UE 104 generates the PSI report 708 including the higher priority PSI report elements and transmission of the remaining lower priority PSI report elements is postponed 710, and these PSI report elements, e.g., PSI element6 and PSI element4 are not included in the current PSI report 708. When transmission of PSI report element is postponed up to a particular priority level, the UE 104 may postpone transmission of all of the information at that or lower priority levels. For example, the PSI report elements may be mapped to the channel container according to the priority rules, where higher priority PSI report elements are mapped first, followed by successively lower priority PSI report elements. If the resulting size of the PSI report is above the size of the channel container, the lowest priority PSI report element is excluded from the PSI report until the size of the resulting PSI report fits in the channel container, and the excluded PSI report elements may be transmitted in a subsequent PSI report.

**FIG. 8** is a message flow 800 with various messages sent between components of the communication system 100 depicted in FIG. 1, illustrating a PSI report that is transmitted on a lower layer channel, where the transmission of some PSI report elements is postponed and transmitted in a subsequent PSI report, according to the disclosure herein. Location server 802 may be, e.g., location server 172 shown in FIG. 1 or LMF 270 shown in FIG. 2. The serving base station 102-1 and other base stations 102-2, 102-3 are sometimes collectively referred to as base stations 102. UE 804 may be a UE that is in sidelink communication with the UE 104. The UE 104 may be configured to perform UE assisted positioning or UE based positioning, using downlink based positioning, uplink based positioning or combined downlink and uplink based positioning. In the message flow 800, it is assumed, unless otherwise stated, that the UE 104 and location server 802 may communicate using lower layer channels as well as other mechanisms, such as LMF in the RAN, as discussed above, to reduce latency. For example, the location server 802 may be within the RAN 801, e.g., as an internal function of an NG-RAN node, such as serving base station 102-1, the location server 802 may be a logical node within the split gNB, e.g., serving base station 102-1, or the location server may be a logical node in the NG-RAN 801, connected to NG-RAN nodes, e.g., serving base station 102-1 and neighboring base stations 102-2 and 102-3 via an interface, such that it can still receive the report from the UE. It should be understood that preliminary or additional conventional stages not shown in FIG. 8 may be performed, such as capability requests and responses, requests for and providing assistance data, etc.

At stage 1, the UE 104 may receive a configuration for the priority based rules that may be used to order the PSI report elements and to select which PSI report elements are to be postponed. The configuration, e.g., may be provided by either serving base station 102-1, the location server 802, or the sidelink UE 804.

At stage 2 and stage 3, the UE 104 receives DL PRS from serving base station 102-1 and neighboring base stations 102-2 and 102-3.

At stage 4, the UE 104 may optionally transmit UL PRS or SRS for positioning, to the base stations 102.

At stage 5, the UE 104 may perform DL positioning measurements for one or more positioning methods based on the DL PRS received at stages 2 and 3, UL positioning measurements for one or more positioning methods based on the UL PRS transmitted at stage 4, or DL and UL positioning measurements for one or more positioning methods based on the DL PRS received at stages 2 and 3 and the UL PRS transmitted at stage 4. In some implementations, the UE 104 may perform multiple positioning measurements, e.g., the same type of positioning measurements at different times and/or different types of positioning measurements at the same time or at different times. By way of example, the positioning information obtained by UE 104 from the positioning measurements include one or more of, timing measurements such as RSTD, UE Rx-Tx, TOA, etc., angle measurements, such as RSRP, power or energy measurements such as RSRP, quality metrics, velocity and/or trajectory measurements, reference TRP, multipath information, LOS/NLOS factors, SINR, and time stamps. The positioning measurements may be for one or more positioning methods for which the UE 104 is configured, such as TDOA, AoD, multi-RTT, hybrid positioning methods, etc.

At stage 6, the UE 104 may receive, e.g., from the serving base station 102-1, a schedule or grant for a lower layer container in which the PSI report is to be transmitted by the UE 105. The grant from the serving base station 102-1 may be based, e.g., on prior PSI reports from the UE 104, and, thus, may not be large enough for all of the PSI report elements generated by the UE 104 based on the positioning measurements from stage 5. For mode 2 sidelink transmission of the PSI report to the sidelink UE 804, the grant for a lower layer container from the serving base station 102-1 may be unnecessary.

At stage 7, the UE 104 generates the PSI report elements based on the positioning measurements from stage 5 as discussed above.

At stage 8, the UE 104 may generate a PSI report based on the PSI report elements. Where the channel container granted at stage 6 is smaller than the PSI report, the transmission of one or more PSI report elements may be postponed, i.e., the postponed PSI report elements are not included in the PSI report, and the PSI report includes one or more indications of postponement. For example, the PSI report may simply indicate whether there are any PSI report elements that are postponed, i.e., whether the PSI report is complete or incomplete, e.g., using a single bit. The PSI report may additionally indicate information relative to the postponed PSI report elements, such as the size of the postponed PSI report elements and/or the type of positioning measurements or information included in the postponed PSI report elements. The PSI report, in some implementations, may indicate postponement per group type of PSI report element. In some implementations, the postponed PSI report elements may be selected according to priority based rules. For example, the UE 104 may order the PSI report elements according to the priority based rules and exclude lower priority PSI report elements. For example, the configuration of the priority based rules may be received from the network entity in stage 1, or the UE may generate the priority based rules configuration based on positioning measurement type, or the priority base rules may be fixed in the UE. The UE 104 generates the PSI report using the ordered PSI report elements. If the size of the PSI report elements is greater than can be accommodated by the scheduled lower layer channel container, the UE 104 excludes at least one low priority PSI report element when generating the PSI report so that the PSI report fits within the lower layer channel container. The PSI report may be divided into a plurality of parts, as illustrated in FIGs. 5 and 6, where a subset of parts may have a constant size and the remaining parts may have a variable size. If the UE 104 generated the priority based rules configuration, the priority based rules configuration may be included in the PSI report. The low priority PSI report elements that are postponed may be included in a later transmitted PSI report.

At stage 9, the UE 104 transmits the PSI report in the lower layer channel container, e.g., to the sidelink UE 804, the serving base station 102 or the location server 802 on an uplink. For example, the UE 104 may transmit the PSI report using a PHY layer, e.g., using PUSCH, PUCCH, PSSCH, or on a MAC layer, using a MAC-CE. Transmission of the PSI report on the lower layer channel, advantageously reduces latency compared to transmission, e.g. on an RRC channel.

At one of stage 10a, stage 10b, and stage 10c, the PSI report is processed, e.g., by the sidelink UE 804, serving base station 102-1 or the location server 802, respectively, e.g., using the priority based rules, to acquire the included PSI report elements and to determine if one or more PSI report elements have been postponed. In some implementations, a position of the UE 104 may be determined based on the PSI report elements received in the PSI report transmitted at stage 9. The serving base station 102-1 may determine the necessary container size for the postponed PSI report elements based on an indication(s) provided in the PSI report from stage 9.

At stage 11, if the PSI report was transmitted to the sidelink UE 804 or location server 802, the sidelink UE 804 or location server 802 may propagate any indication of type and/or size of postponed PSI report elements to the serving base station 102-1. The serving base station 102-1 may then determine the necessary container size for the postponed PSI report elements.

At stage 12, the UE 104 may receive, e.g., from the serving base station 102-1, a schedule or grant for a lower layer container in which the PSI report for the postponed PSI report elements may be transmitted by the UE 105.

At stage 13, the UE 104 generates a second PSI report based on the postponed PSI report elements and may indicate whether any PSI report elements are being postponed. For example, if all of the remaining PSI report elements are included in the PSI report, the PSI report may indicate that the PSI report is complete. If not all of the PSI report elements can be included in the PSI report, one or more PSI report elements may again be postponed, and the PSI report may indicate that one or more PSI report elements are postponed. As discussed at stage 8, the PSI report may further indicate information relative to the postponed PSI report elements, such as the size of the postponed PSI report elements and/or the type of positioning measurements or information included in the postponed PSI report elements. The PSI report, in some implementations, may indicate postponement based on group type of PSI report element. As discussed in stage 8, the postponed PSI report elements may be selected according to the priority based rules.

At stage 14, the UE 104 transmits the second PSI report with the previously postponed PSI report elements in the lower layer channel container, e.g., to the sidelink UE 804, the serving base station 102 or the location server 802 on an uplink. For example, the UE 104 may transmit the PSI report using a PHY layer, e.g., using PUSCH, PUCCH, PSSCH, or on a MAC layer, using a MAC-CE. Transmission of the PSI report on the lower layer channel, advantageously reduces latency compared to transmission, e.g. on an RRC channel.

At one of stage 15a, stage 15b, and stage 15c, the second PSI report is processed, e.g., by the sidelink UE 804, serving base station 102-1 or the location server 802, respectively, e.g., using the priority based rules, to acquire the included PSI report elements and to determine if one or more PSI report elements have been postponed. If the second PSI report transmitted at stage 14 is incomplete, the stages 11-14 may be repeated until all desired PSI report elements have been reported. In some implementations, a position of the UE 104 determined earlier, e.g., at stage 10, may be revised or improved based on the PSI report elements received in the second PSI report transmitted at stage 14. In some implementations, the PSI report elements from the PSI report received at stage 14 and all earlier received PSI report elements may be used to determine a position of the UE 104. In some implementations, the sidelink UE 804 may forward the PSI report elements to one of serving base station 102-1 or the location server 802 for processing.

**FIG. 9** shows a flowchart for an exemplary method 900 for wireless communications for a UE, such as UE 104, e.g., to reduce latency by transmitting a PSI report on a lower layer channel, in a manner consistent with disclosed implementation.

At block 902, the UE determines a plurality of positioning state information (PSI) report elements, wherein each PSI report element comprises information related to positioning measurements performed by the UE, e.g., as discussed at stage 7 of FIG. 8. At block 904, a first PSI report is generated based on the PSI report elements, wherein reporting at least one PSI report element is postponed and the at least one PSI report element is not included in the first PSI report, and wherein the first PSI report comprises an indication of postponement of the at least one PSI report element, e.g., as discussed at stage 8 of FIG. 8. At block 906, the first PSI report is transmitted to a network entity in a lower layer channel container, e.g., as discussed at stage 9 of FIG. 8.

In some implementations, the indication of the postponement of the at least one PSI report element comprises a completeness bit, e.g., as discussed in FIG. 5 and at stage 8 of FIG. 8.

In some implementations, the first PSI report may further comprise an identification of the at least one PSI report element that is postponed, e.g., as discussed in FIG. 5 and at stage 8 of FIG. 8.

In some implementations, the indication of the postponement of the at least one PSI report element comprises group type completeness bits that identify postponement of different group types of PSI report elements, e.g., as discussed in FIG. 6 and at stage 8 of FIG. 8.

In some implementations, the UE may further receive from a serving base station, in response to the indication of the postponement of the at least one PSI report element, a grant for a second lower layer channel container for a second PSI report to contain the at least one PSI report element, e.g., as discussed at stage 12 of FIG. 8. The second PSI report may be generated that contains the at least one PSI report element, e.g., as discussed at stage 13 of FIG. 8. The second PSI report may be transmitted to the network entity in the second lower layer channel container, e.g., as discussed at stage 14 of FIG. 8.

In some implementations, the UE may order the PSI report elements according to priority based rules; and the first PSI report based on the ordered PSI report elements, wherein the at least one PSI report element that is not included in the first PSI report is a low priority PSI report element, e.g., as discussed in FIG. 7 and at stage 8 of FIG. 8.

In some implementations, the lower layer channel container comprises either a physical layer channel container or a Medium Access Control - Control Element (MAC-CE) block. For example, the physical layer channel may be a physical uplink shared channel (PUSCH), a physical uplink control channel (PUCCH), or a physical sidelink discovery channel (PSSCH).

In some implementations, the first PSI report is divided into a plurality of parts, with a subset of parts having a constant size and remaining parts having a variable size, and wherein the at least one PSI report element is not included in the remaining parts of the first PSI report, e.g., as discussed in FIGs. 5 and 6 and at stage 8 of FIG. 8.

In some implementations, the network entity may be one of a serving base station in a Radio Access Network (RAN), a location server in the RAN, or a second UE in sidelink communications with the UE.

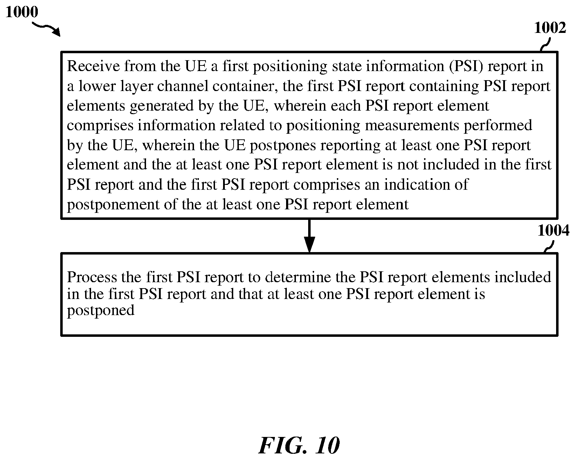

**FIG. 10** shows a flowchart for an exemplary method 1000 for wireless communications for a UE, such as UE 104, performed by a network entity in a wireless network, such as serving base station in a RAN, e.g., base station 102, or a location server with the RAN, such as location sever 172 or LMF 270, or a UE in sidelink communication with the UE, that receives a PSI report on a lower layer channel, in a manner consistent with disclosed implementation.

At block 1002, the network entity receives from the UE a first positioning state information (PSI) report in a lower layer channel container, the first PSI report containing PSI report elements generated by the UE, wherein each PSI report element comprises information related to positioning measurements performed by the UE, wherein the UE postpones reporting at least one PSI report element and the at least one PSI report element is not included in the first PSI report and the first PSI report comprises an indication of postponement of the at least one PSI report element, e.g., as discussed at stage 9 of FIG. 8. At block 1004, the first PSI report is processed to determine the PSI report elements included in the first PSI report and that at least one PSI report element is postponed, e.g., as discussed at stage 10 of FIG. 8.

In one implementation, the indication of the postponement of the at least one PSI report element comprises a completeness bit, e.g., as discussed in FIG. 5 and at stage 8 of FIG. 8.

In one implementation, the first PSI report further comprises an identification of the at least one PSI report element that is postponed, e.g., as discussed in FIG. 5 and at stage 8 of FIG. 8.

In one implementation, the indication of the postponement of the at least one PSI report element comprises group type completeness bits that identify postponement of different group types of PSI report elements, e.g., as discussed in FIG. 6 and at stage 8 of FIG. 8.

In one implementation, the network entity may determine, in response to the indication of the postponement of the at least one PSI report element, a size of a second lower layer channel container for a second PSI report to contain the at least one PSI report element, e.g., as discussed at stages 10 and 11 of FIG. 8. The network entity may transmit to the UE a grant for the second lower layer channel container, e.g., as discussed at stage 12 of FIG. 8. A second PSI report may be received from the UE that contains the at least one PSI report element, e.g., as discussed at stage 14 of FIG. 8. The second PSI report may be processed to determine the at least one PSI report element included in the second PSI report, e.g., as discussed at stage 15 of FIG. 8. In one example, a position estimate may be determined for the UE based on the PSI report elements in the first PSI report and revising the position estimate for the UE based on the at least one PSI report element in the second PSI report, e.g., as discussed at stages 10 and 15 of FIG. 8. In another example, the network entity may wait until after receiving the second PSI report to determine a position estimate for the UE based on the PSI report elements in the first PSI report combined with the at least one PSI report element in the second PSI report, e.g., as discussed at stage 15 of FIG. 8.

In one implementation, the PSI report elements in the first PSI report are ordered by the UE based on priority based rules, wherein the at least one PSI report element that is not included in the first PSI report is a low priority PSI report element, e.g., as discussed in FIG. 7 and at stage 8 of FIG. 8.

In one implementation, the lower layer channel container comprises either a physical layer channel container or a Medium Access Control - Control Element (MAC-CE) block. For example, the physical layer channel may include a physical uplink shared channel (PUSCH), a physical uplink control channel (PUCCH), or a physical sidelink discovery channel (PSSCH).

In one implementation, the first PSI report is divided into a plurality of parts, with a subset of parts having a constant size and remaining parts having a variable size, and wherein the at least one PSI report element is not included in the remaining parts of the first PSI report, e.g., as discussed in FIGs. 5 and 6 and at stage 8 of FIG. 8.

In one implementation, the network entity may be one of a serving base station in a Radio Access Network (RAN), a location server in the RAN, or a second UE in sidelink communications with the UE.

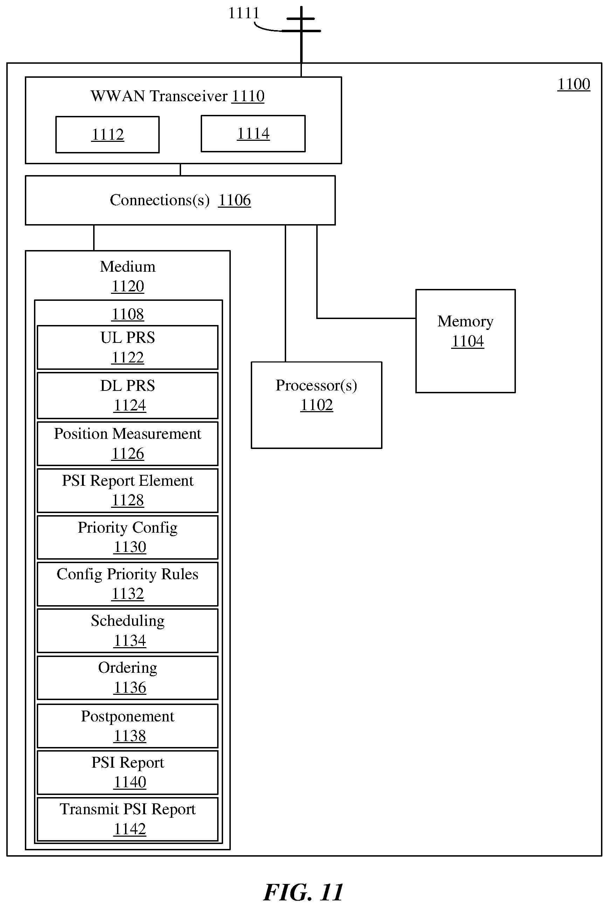

**FIG. 11** shows a schematic block diagram illustrating certain exemplary features of a UE 1100, e.g., which may be UE 104 shown in FIG. 1, enabled to postpone the transmission of one or more PSI report elements while transmitting other PSI report elements in a PSI report on a lower layer channel, according to the disclosure herein. UE 1100 may, for example, include one or more processors 1102, memory 1104, an external interface such as a wireless transceiver 1110 (e.g., wireless network interface), which may be operatively coupled with one or more connections 1106 (e.g., buses, lines, fibers, links, etc.) to non-transitory computer readable medium 1120 and memory 1104. The computer readable medium 1120 may be stored in or otherwise a part of memory 1104 or may be completely or partially (or temporarily) external the memory 1104, and thus, may be considered inclusive, exclusive, or part of each. The UE 1100 may further include additional items, which are not shown, such as a user interface that may include e.g., a display, a keypad or other input device, such as virtual keypad on the display, through which a user may interface with the UE, or other types of receivers or transceivers, such as a Wireless Local Area Network (WLAN) transceiver, Bluetooth® transceiver, a satellite positioning system receiver, etc. In certain example implementations, all or part of UE 1100 may take the form of a chipset, and/or the like. Wireless transceiver 1110 may, for example, include a transmitter 1112 enabled to transmit one or more signals over one or more types of wireless communication networks and a receiver 1114 to receive one or more signals transmitted over the one or more types of wireless communication networks.

In some embodiments, UE 1100 may include antenna 1111, which may be internal or external. UE antenna 1111 may be used to transmit and/or receive signals processed by wireless transceiver 1110. In some embodiments, UE antenna 1111 may be coupled to wireless transceiver 1110. In some embodiments, measurements of signals received (transmitted) by UE 1100 may be performed at the point of connection of the UE antenna 1111 and wireless transceiver 1110. For example, the measurement point of reference for received (transmitted) RF signal measurements may be an input (output) terminal of the receiver 1114 (transmitter 1112) and an output (input) terminal of the UE antenna 1111. In a UE 1100 with multiple UE antennas 1111 or antenna arrays, the antenna connector may be viewed as a virtual point representing the aggregate output (input) of multiple UE antennas. UE 1100 may receive signals, e.g., DL PRS, and/or transmit UL PRS or SRS for positioning. Measurements of signals, including one or more of timing measurements, such RSTD, UE Rx-Tx, TOA, etc., energy measurements, such as RSRP, quality metrics, velocity and/or trajectory measurements, reference TRP, multipath information, line of sight (LOS) or non-line of sight (NLOS) factors, signal to interference noise ratio (SINR), and time stamps may be processed by the one or more processors 1202.

The one or more processors 1102 may be implemented using a combination of hardware, firmware, and software. For example, the one or more processors 1102 may be configured to perform the functions discussed herein by implementing one or more instructions or program code 1108 on a non-transitory computer readable medium, such as medium 1120 and/or memory 1104. In some embodiments, the one or more processors 1102 may represent one or more circuits configurable to perform at least a portion of a data signal computing procedure or process related to the operation of UE 1100.

The medium 1120 and/or memory 1104 may store instructions or program code 1108 that contain executable code or software instructions that when executed by the one or more processors 1102 cause the one or more processors 1102 to operate as a special purpose computer programmed to perform the techniques disclosed herein. As illustrated in UE 1100, the medium 1120 and/or memory 1104 may include one or more components or modules that may be implemented by the one or more processors 1102 to perform the methodologies described herein. While the components or modules are illustrated as software in medium 1120 that is executable by the one or more processors 1102, it should be understood that the components or modules may be stored in memory 1104 or may be dedicated hardware either in the one or more processors 1102 or off the processors.

A number of software modules and data tables may reside in the medium 1120 and/or memory 1104 and be utilized by the one or more processors 1102 in order to manage both communications and the functionality described herein. It should be appreciated that the organization of the contents of the medium 1120 and/or memory 1104 as shown in UE 1100 is merely exemplary, and as such the functionality of the modules and/or data structures may be combined, separated, and/or be structured in different ways depending upon the implementation of the UE 1100.

The medium 1120 and/or memory 1104 may include a UL PRS transmit module 1122 that when implemented by the one or more processors 1102 configures the one or more processors 1102 to transmit, via the wireless transceiver 1110, UL PRS or SRS for positioning.

The medium 1120 and/or memory 1104 may include a DL PRS module 1124 that when implemented by the one or more processors 1102 configures the one or more processors 1102 to receive, via the wireless transceiver 1110, DL PRS transmitted by one or more base stations.

The medium 1120 and/or memory 1104 may include a position measurement module 1126 that when implemented by the one or more processors 1102 configures the one or more processors 1102 to perform positioning measurements using received DL PRS and/or UL PRS. For example, the one or more processors 1102 may be configured to perform DL positioning measurements for one or more positioning methods based on received DL PRS, UL positioning measurements for one or more positioning methods based on transmitted UL PRS, or DL and UL positioning measurements for one or more positioning methods based on the received DL PRS and the transmitted UL PRS. Multiple positioning measurements may be performed, e.g., the same type of positioning measurements may be performed at different times and/or different types of positioning measurements may be performed at the same time or at different times. The positioning measurements may be for one or more positioning methods, such as TDOA, AoD, multi-RTT, hybrid positioning methods, etc. By way of example, the one or more processors 1102 may be configured for positioning measurements including one or more of, timing measurements such as RSTD, UE Rx-Tx, TOA, etc., energy measurements such as RSRP, quality metrics, velocity and/or trajectory measurements, reference TRP, multipath information, LOS/NLOS factors, SINR, and time stamps. In some implementations, the one or more processors 1102 may be further configured to estimate a position of the UE 1100 in a UE based positioning process using the position measurements and the locations of base stations, e.g., received in assistance data.

The medium 1120 and/or memory 1104 may include a PSI report element module 1128 that when implemented by the one or more processors 1102 configures the one or more processors 1102 to determine a plurality of PSI report elements based on information related to the positioning measurements. By way of example, the information related to positioning measurements used to determine the PSI report elements may include one or more of: at least one RSTD vector; at least one UE Rx-Tx vector; at least one RSRP vector; at least one quality metric; at least one velocity vector; a reference TRP; at least one TOA vector; at least one multipath vector; at least one LOS/ NLOS factor; at least one SINR vector; at least one time-stamp.

The medium 1120 and/or memory 1104 may include a priority configuration module 1130 that when implemented by the one or more processors 1102 configures the one or more processors 1102 to receive, via the wireless transceiver 1110, a priority based rules configuration based on positioning measurement type from a network entity, such as a serving base station, location server, or a sidelink UE.

The medium 1120 and/or memory 1104 may include a configure priority rules module 1132 that when implemented by the one or more processors 1102 configures the one or more processors 1102 to configure the priority rules to be used to order the PSI report elements. The configuration for the priority rules, for example, may be received from a network entity and stored in medium and/or memory 1104. The configuration for the priority rules may be generated by the UE 1100 itself and stored in medium and/or memory 1104, and may be transmitted to a network entity with the PSI report. In some implementations, the configuration for the priority rules may be static and stored in medium and/or memory 1104.

The medium 1120 and/or memory 1104 may include a scheduling module 1134 that when implemented by the one or more processors 1102 configures the one or more processors 1102 to determine a schedule for a lower layer channel container in which the PSI report is to be transmitted by the UE 1100, e.g., by receiving the grant from a serving base station, via the wireless transmitter.

The medium 1120 and/or memory 1104 may include an ordering module 1136 that when implemented by the one or more processors 1102 configures the one or more processors 1102 to order the PSI report elements, e.g., from highest priority to lowest priority, according to the priority based rules. For example, the order of the PSI report elements may be based on priorities giving to the different types of positioning measurement information.

The medium 1120 and/or memory 1104 may include a postponement module 1138 that when implemented by the one or more processors 1102 configures the one or more processors 1102 to determine one or more PSI report elements that will be postponed, i.e., not included in a current PSI report and transmitted in a subsequent PSI report. For example, the one or more processors 1102 may be configured to postpone at least one low priority PSI report element, e.g., if the size of the PSI report elements is greater than can be accommodated by the scheduled lower layer channel container.

The medium 1120 and/or memory 1104 may include a PSI report module 1140 that when implemented by the one or more processors 1102 configures the one or more processors 1102 to generate a PSI report based on the PSI report elements that are not postponed and to include one or more indications of postponement if one or more PSI report elements are postponed. For example, the PSI report may simply indicate whether there are any PSI report elements that are postponed, i.e., whether the PSI report is complete or incomplete, e.g., using a single bit. The PSI report may additionally indicate information relative to the postponed PSI report elements, such as the size of the postponed PSI report elements and/or the type of positioning measurements or information included in the postponed PSI report elements. The PSI report, in some implementations, may indicate postponement per group type of PSI report element. The one or more processors 1102 may be configured to divide the PSI report into a plurality of parts, where a subset of parts may have a constant size and the remaining parts may have a variable size. The one or more processors 1102 may be configured to include the priority based rules configuration in the PSI report, e.g., if the priority based rules configuration is generated by the UE 1100.

The medium 1120 and/or memory 1104 may include a transmit PSI report module 1142 that when implemented by the one or more processors 1102 configures the one or more processors 1102 to transmit the PSI report in an SL or UL lower layer channel container to a network entity, such as another UE, the serving base station, or location server, via the wireless transceiver 1110. For example, the UE 114 may transmit the PSI report using a PHY layer, e.g., using PUSCH, PUCCH, PSSCH, or on a MAC layer, using a MAC-CE block.

The methodologies described herein may be implemented by various means depending upon the application. For example, these methodologies may be implemented in hardware, firmware, software, or any combination thereof. For a hardware implementation, the one or more processors 1102 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1120 or memory 1104 that is connected to and executed by the one or more processors 1102. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1108 on a non-transitory computer readable medium, such as medium 1120 and/or memory 1104. Examples include computer readable media encoded with a data structure and computer readable media encoded with a computer program 1108. For example, the non-transitory computer readable medium including program code 1108 stored thereon may include program code 1108 to support to postponement of the transmission of one or more PSI report elements and transmission of other PSI report elements in a PSI report on a lower layer channel, in a manner consistent with disclosed embodiments. Non-transitory computer readable medium 1120 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1108 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 1120, instructions and/or data may be provided as signals on transmission media included in a communication apparatus. For example, a communication apparatus may include a wireless transceiver 1110 having signals indicative of instructions and data. The instructions and data are configured to cause one or more processors to implement the functions outlined in the claims. That is, the communication apparatus includes transmission media with signals indicative of information to perform disclosed functions.

Memory 1104 may represent any data storage mechanism. Memory 1104 may include, for example, a primary memory and/or a secondary memory. Primary memory may include, for example, a random access memory, read only memory, etc. While illustrated in this example as being separate from one or more processors 1102, it should be understood that all or part of a primary memory may be provided within or otherwise co-located/coupled with the one or more processors 1102. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1120. As such, in certain example implementations, the methods and/or apparatuses presented herein may take the form in whole or part of a computer readable medium 1120 that may include computer implementable code 1108 stored thereon, which if executed by one or more processors 1102 may be operatively enabled to perform all or portions of the example operations as described herein. Computer readable medium 1120 may be a part of memory 1104.

A UE, such as UE 1100, configured to support positioning may include a means for determining a plurality of positioning state information (PSI) report elements, wherein each PSI report element comprises information related to positioning measurements performed by the UE which may be, e.g., the one or more processors 1102 with dedicated hardware or implementing executable code or software instructions in memory 1104 or medium 1120 such as the PSI report element module 1128. A means for generating a first PSI report based on the PSI report elements, wherein reporting at least one PSI report element is postponed and the at least one PSI report element is not included in the first PSI report, and wherein the first PSI report comprises an indication of postponement of the at least one PSI report element may be, e.g., the one or more processors 1102 with dedicated hardware or implementing executable code or software instructions in memory 1104 or medium 1120 such as the PSI report module 1140. A means for transmitting the first PSI report to a network entity in a lower layer channel container may be, e.g., at least one wireless transceiver 1110 and one or more processors 1102 with dedicated hardware or implementing executable code or software instructions in memory 1104 or medium 1120 such as the transmit PSI report module 1142.

In one implementation, the UE may further include a means for receiving from a serving base station, in response to the indication of the postponement of the at least one PSI report element, a grant for a second lower layer channel container for a second PSI report to contain the at least one PSI report element, which may be, e.g., at least one wireless transceiver 1110 and one or more processors 1102 with dedicated hardware or implementing executable code or software instructions in memory 1104 or medium 1120 such as the scheduling module 1134. A means for generating the second PSI report that contains the at least one PSI report element may be, e.g., the one or more processors 1102 with dedicated hardware or implementing executable code or software instructions in memory 1104 or medium 1120 such as the PSI report module 1140. A means for transmitting the second PSI report to the network entity in the second lower layer channel container may be, e.g., at least one wireless transceiver 1110 and one or more processors 1102 with dedicated hardware or implementing executable code or software instructions in memory 1104 or medium 1120 such as the transmit PSI report module 1142.

In one implementation, the UE may further include a means for ordering the PSI report elements according to priority based rules which may be, e.g., the one or more processors 1102 with dedicated hardware or implementing executable code or software instructions in memory 1104 or medium 1120 such as the ordering module 1136. A means for generating the first PSI report based on the ordered PSI report elements, wherein the at least one PSI report element that is not included in the first PSI report is a low priority PSI report element may be, e.g., the one or more processors 1102 with dedicated hardware or implementing executable code or software instructions in memory 1104 or medium 1120 such as the PSI report 1140.

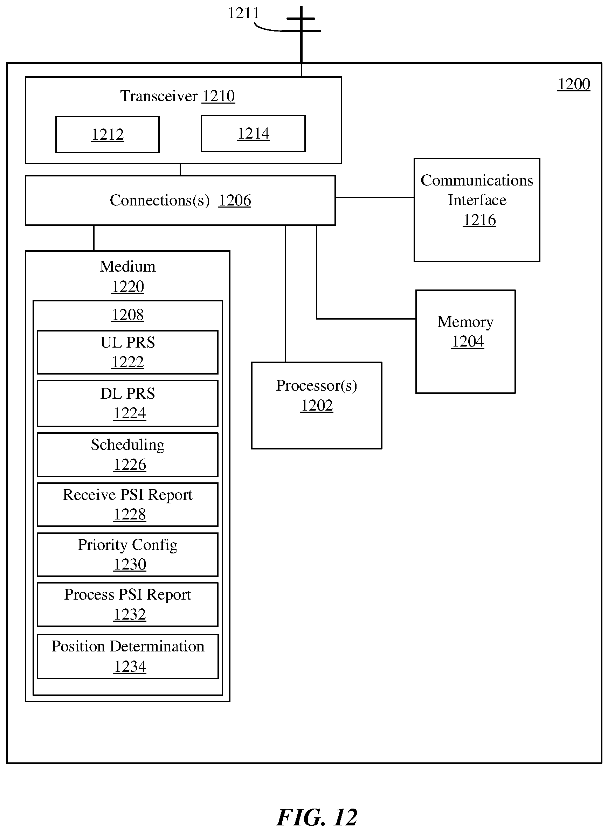

FIG. 12 shows a schematic block diagram illustrating certain exemplary features of a network entity 1200 in a wireless network enabled to support wireless communications with a UE, e.g., UE 104, to postpone the transmission of one or more PSI report elements while transmitting other PSI report elements in a PSI report, according to the disclosure herein. The network entity 1200, for example, may be a serving base station 102 or location server 172 or LMF 270 in FIGs. 1 and 2B, or another UE in SL communication with UE. The network entity 1200 may, for example, include one or more processors 1202, memory 1204, and an external interface, which may include a wireless transceiver 1210 (e.g., wireless network interface), e.g., if the network entity 1200 is a serving base station or sidelink UE, and/or a communications interface 1216 (e.g., wireline or wireless network interface to other network entities and/or the core network), which may be operatively coupled with one or more connections 1206 (e.g., buses, lines, fibers, links, etc.) to non-transitory computer readable medium 1220 and memory 1204. The computer readable medium 1220 may be stored in or otherwise a part of memory 1204 or may be completely or partially (or temporarily) external the memory 1204, and thus, may be considered inclusive, exclusive, or part of each. In some implementations, the network entity 1200 may further include additional items, which are not shown, such as a user interface that may include e.g., a display, a keypad or other input device, such as virtual keypad on the display, through which a user may interface with the network entity, e.g., if the network entity is a sidelink UE. In certain example implementations, all or part of network entity 1200 may take the form of a chipset, and/or the like. Wireless transceiver 1210, if present, may, for example, include a transmitter 1212 enabled to transmit one or more signals over one or more types of wireless communication networks and a receiver 1214 to receive one or more signals transmitted over the one or more types of wireless communication networks. The communications interface 1216 may be a wired or wireless interface capable of connecting to other base stations, e.g., in the RAN or network entities, such as a location server 172 shown in FIG. 1.

In some embodiments, network entity 1200 may include antenna 1211, which may be internal or external. Antenna 1211 may be used to transmit and/or receive signals processed by wireless transceiver 1210. In some embodiments, antenna 1211 may be coupled to wireless transceiver 1210. In some embodiments, measurements of signals received (transmitted) by network entity 1200 may be performed at the point of connection of the antenna 1211 and wireless transceiver 1210. For example, the measurement point of reference for received (transmitted) RF signal measurements may be an input (output) terminal of the receiver 1214 (transmitter 1212) and an output (input) terminal of the antenna 1211. In a network entity 1200 with multiple antennas 1211 or antenna arrays, the antenna connector may be viewed as a virtual point representing the aggregate output (input) of multiple antennas. In some embodiments, network entity 1200 may measure received signals, (e.g., UL PRS or SRS for positioning) including signal strength and TOA measurements and the raw measurements may be processed by the one or more processors 1202.

The one or more processors 1202 may be implemented using a combination of hardware, firmware, and software. For example, the one or more processors 1202 may be configured to perform the functions discussed herein by implementing one or more instructions or program code 1208 on a non-transitory computer readable medium, such as medium 1220 and/or memory 1204. In some embodiments, the one or more processors 1202 may represent one or more circuits configurable to perform at least a portion of a data signal computing procedure or process related to the operation of network entity 1200.

The medium 1220 and/or memory 1204 may store instructions or program code 1208 that contain executable code or software instructions that when executed by the one or more processors 1202 cause the one or more processors 1202 to operate as a special purpose computer programmed to perform the techniques disclosed herein. As illustrated in network entity 1200, the medium 1220 and/or memory 1204 may include one or more components or modules that may be implemented by the one or more processors 1202 to perform the methodologies described herein. While the components or modules are illustrated as software in medium 1220 that is executable by the one or more processors 1202, it should be understood that the components or modules may be stored in memory 1204 or may be dedicated hardware either in the one or more processors 1202 or off the processors.

A number of software modules and data tables may reside in the medium 1220 and/or memory 1204 and be utilized by the one or more processors 1202 in order to manage both communications and the functionality described herein. It should be appreciated that the organization of the contents of the medium 1220 and/or memory 1204 as shown in network entity 1200 is merely exemplary, and as such the functionality of the modules and/or data structures may be combined, separated, and/or be structured in different ways depending upon the implementation of the network entity 1200.

The medium 1220 and/or memory 1204 may include a UL PRS module 1222, e.g., if the network entity 1200 is a serving base station, that when implemented by the one or more processors 1202 configures the one or more processors 1202 to receive, via the wireless transceiver 1210, UL PRS or SRS for positioning, from the UE 124.

The medium 1220 and/or memory 1204 may include a DL PRS module 1224, e.g., if the network entity 1200 is a serving base station, that when implemented by the one or more processors 1202 configures the one or more processors 1202 to transmit, via the wireless transceiver 1210, DL PRS to the UE 124.

The medium 1220 and/or memory 1204 may include a scheduling module 1226, e.g., if the network entity 1200 is a serving base station, that when implemented by the one or more processors 1202 configures the one or more processors 1202 to schedule for a lower layer channel container in which the PSI report is to be transmitted by the UE 104, and transmit the schedule or grant to the UE 104, via the wireless transmitter. The scheduling module 1226 configure the one or more processors 1202 to determine the size of the lower layer channel container for a PSI report based on one or more indications of postponement and/or information relative to postponed PSI report elements, such as the size of the postponed PSI report elements and/or the type of positioning measurements or information, that is included in a received PSI report. If the network entity 1200 is another UE or location server, the scheduling module 1226 may configure the one or more processors 1202 to propagate, via transceiver 1210 or communications interface 1216, postponement information to the serving base station for scheduling.

The medium 1220 and/or memory 1204 may include a receive PSI report module 1228 that when implemented by the one or more processors 1202 configures the one or more processors 1202 to receive the PSI report in a lower layer channel container from the UE 104, e.g., via the wireless transceiver 1210 if the network entity 1200 is a sidelink UE or a serving base station, or a communications interface 1216 if the network entity 1200 is a location server. The PSI report includes a one or more indications of postponement if one or more PSI report elements are postponed. For example, the PSI report may simply indicate whether there are any PSI report elements that are postponed, i.e., whether the PSI report is complete or incomplete, e.g., using a single bit. The PSI report may additionally indicate information relative to the postponed PSI report elements, such as the size of the postponed PSI report elements and/or the type of positioning measurements or information included in the postponed PSI report elements. The PSI report, in some implementations, may indicate postponement per group type of PSI report element. The lower layer channel container, for example, may be a SL channel if the network entity 1200 is another UE, or an UL channel if the network entity 1200 is a serving base station or location server. For example, the PSI report may be received on a PHY layer, e.g., using PUSCH, PUCCH, PSSCH, or on a MAC layer, using a MAC-CE. The PSI report may include information related to positioning measurements performed by the UE 104, wherein the PSI report elements in the PSI report may be ordered by the UE based on priority based rules, wherein at least one low priority PSI report element is postponed from transmission in the PSI report.

The medium 1220 and/or memory 1204 may include a priority configuration module 1230 that when implemented by the one or more processors 1202 configures the one or more processors 1202 to configure the priority rules to be used by the UE to order the PSI report elements. The configuration for the priority rules, for example, may be transmitted to the UE, e.g., via wireless transceiver 1210 or communications interface 1216. If the UE 104 generates the priority rules configuration, the one or more processors 1202 may be configured to receive the priority rules confirmation from the UE, e.g., in the PSI report. In some implementations, the configuration for the priority rules may be static and stored in medium and/or memory 1204.

The medium 1220 and/or memory 1204 may include a process PSI report module 1232 that when implemented by the one or more processors 1202 configures the one or more processors 1202 to process the PSI report based on the priority based rules to determine the PSI report elements.

The medium 1220 and/or memory 1204 may include a position determination module 1234 that when implemented by the one or more processors 1202 configures the one or more processors 1202 to determine a position of the UE using PSI report elements received in the PSI report. The one or more processors 1202 may be configured to determine a position of the UE using PSI report elements received in a first PSI report and to update or revise the position determination with postponed PSI report elements after a subsequent PSI report is received. In another implementation, the one or more processors 1202 may be configured to wait until all PSI report elements are received and to determine a position of the UE using PSI report elements received in a first PSI report combined with postponed PSI report elements received in a subsequent PSI report.

The methodologies described herein may be implemented by various means depending upon the application. For example, these methodologies may be implemented in hardware, firmware, software, or any combination thereof. For a hardware implementation, the one or more processors 1202 may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1220 or memory 1204 that is connected to and executed by the one or more processors 1202. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1208 on a non-transitory computer readable medium, such as medium 1220 and/or memory 1204. Examples include computer readable media encoded with a data structure and computer readable media encoded with a computer program 1208. For example, the non-transitory computer readable medium including program code 1208 stored thereon may include program code 1208 to support a UE to postpone the transmission of one or more PSI report elements while transmitting other PSI report elements in a PSI report on a lower layer channel, in a manner consistent with disclosed embodiments. Non-transitory computer readable medium 1220 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1208 in the form of instructions or data structures and that can be accessed by a computer; disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media.

In addition to storage on computer readable medium 1220, instructions and/or data may be provided as signals on transmission media included in a communication apparatus. For example, a communication apparatus may include a wireless transceiver 1210 having signals indicative of instructions and data. The instructions and data are configured to cause one or more processors to implement the functions outlined in the claims. That is, the communication apparatus includes transmission media with signals indicative of information to perform disclosed functions.

Memory 1204 may represent any data storage mechanism. Memory 1204 may include, for example, a primary memory and/or a secondary memory. Primary memory may include, for example, a random access memory, read only memory, etc. While illustrated in this example as being separate from one or more processors 1202, it should be understood that all or part of a primary memory may be provided within or otherwise co-located/coupled with the one or more processors 1202. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1220. As such, in certain example implementations, the methods and/or apparatuses presented herein may take the form in whole or part of a computer readable medium 1220 that may include computer implementable code 1208 stored thereon, which if executed by one or more processors 1202 may be operatively enabled to perform all or portions of the example operations as described herein. Computer readable medium 1220 may be a part of memory 1204.

A network entity, such as network entity 1200, configured to support positioning of a UE, may include a means for receiving from the UE a first positioning state information (PSI) report in a lower layer channel container, the first PSI report containing PSI report elements generated by the UE, wherein each PSI report element comprises information related to positioning measurements performed by the UE, wherein the UE postpones reporting at least one PSI report element and the at least one PSI report element is not included in the first PSI report and the first PSI report comprises an indication of postponement of the at least one PSI report element which may be, e.g., the external interface, such as the transceiver 1210 or communications interface 1216, and the one or more processors 1202 with dedicated hardware or implementing executable code or software instructions in memory 1204 or medium 1220 such as the receive PSI report module 1228. A means for processing the first PSI report to determine the PSI report elements included in the first PSI report and that at least one PSI report element is postponed may be, e.g., the one or more processors 1202 with dedicated hardware or implementing executable code or software instructions in memory 1204 or medium 1220 such as the process PSI report module 1232.

In one implementation, the network entity may further include a means for determining, in response to the indication of the postponement of the at least one PSI report element, a size of a second lower layer channel container for a second PSI report to contain the at least one PSI report element, which may be, e.g., the one or more processors 1202 with dedicated hardware or implementing executable code or software instructions in memory 1204 or medium 1220 such as the scheduling module 1226. A means for transmitting to the UE a grant for the second lower layer channel container may be, e.g., the external interface, such as the transceiver 1210 or communications interface 1216, and the one or more processors 1202 with dedicated hardware or implementing executable code or software instructions in memory 1204 or medium 1220 such as the scheduling module 1226. A means for means for receiving from the UE the second PSI report that contains the at least one PSI report element may be, e.g., the external interface, such as the transceiver 1210 or communications interface 1216, and the one or more processors 1202 with dedicated hardware or implementing executable code or software instructions in memory 1204 or medium 1220 such as the receive PSI report module 1228. A means for processing the second PSI report to determine the at least one PSI report element included in the second PSI report may be, e.g., the one or more processors 1202 with dedicated hardware or implementing executable code or software instructions in memory 1204 or medium 1220 such as the process PSI report module 1232.

In one implementation, the network entity may further include a means for determining a position estimate for the UE based on the PSI report elements in the first PSI report and revising the position estimate for the UE based on the at least one PSI report element in the second PSI report which may be, e.g., the one or more processors 1202 with dedicated hardware or implementing executable code or software instructions in memory 1204 or medium 1220 such as the position determination module 1234.

In one implementation, the network entity may further include a means for waiting until after receiving the second PSI report to determine a position estimate for the UE based on the PSI report elements in the first PSI report combined with the at least one PSI report element in the second PSI report which may be, e.g., the one or more processors 1202 with dedicated hardware or implementing executable code or software instructions in memory 1204 or medium 1220 such as the position determination module 1234.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared, or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures, or characteristics.

Additionally, many modifications may be made to adapt a particular situation to the teachings of claimed subject matter without departing from the central concept described herein.

**Claims**

1.  A method performed by a user equipment, UE, (104), for supporting positioning of the UE (104), comprising:

    determining a plurality of positioning state information, PSI, report elements (702), wherein each PSI report element (702) comprises information related to positioning measurements performed by the UE (104);
    generating a first PSI report (708) based on the PSI report elements (702), wherein reporting at least one PSI report element (702) is postponed and the at least one PSI report element (702) is not included in the first PSI report (708), and wherein the first PSI report (708) comprises an indication of postponement (512) of the at least one PSI report element (702); and
    transmitting the first PSI report (708) to a network entity (102) in a lower layer channel container.

2.  The method of claim 1, wherein the indication of the postponement of the at least one PSI report element comprises a completeness bit.

3.  The method of claim 1, wherein the first PSI report further comprises an identification of the at least one PSI report element that is postponed.

4.  The method of claim 1, wherein the indication of the postponement of the at least one PSI report element comprises group type completeness bits that identify postponement of different group types of PSI report elements.

5.  The method of claim 1, further comprising:

    receiving from a serving base station, in response to the indication of the postponement of the at least one PSI report element, a grant for a second lower layer channel container for a second PSI report to contain the at least one PSI report element;
    generating the second PSI report that contains the at least one PSI report element; and
    transmitting the second PSI report to the network entity in the second lower layer channel container.

6.  The method of claim 1, further comprising:

    ordering the PSI report elements according to priority based rules; and
    generating the first PSI report based on the ordered PSI report elements, wherein the at least one PSI report element that is not included in the first PSI report is a low priority PSI report element.

7. The method of claim 1, wherein the lower layer channel container comprises either a physical layer channel container or a Medium Access Control - Control Element, MAC-CE, block.

8. A user equipment, UE, (104) configured to support positioning, comprising:

   a wireless transceiver (1110) configured to wirelessly communicate with a network entity (102) in a wireless communication system;
   at least one memory (1104);
   at least one processor (1202) coupled to the wireless transceiver (1110) and the at least one memory (1104), wherein the at least one processor (1202) is configured to:

   determine a plurality of positioning state information, PSI, report elements (702), wherein each PSI report element (702) comprises information related to positioning measurements performed by the UE (104);
   generate a first PSI report (708) based on the PSI report elements (702), wherein reporting at least one PSI report element (702) is postponed and the at least one PSI report element (702) is not included in the first PSI report (708), and wherein the first PSI report (708) comprises an indication of postponement (512) of the at least one PSI report element (702); and
   transmit, via the wireless transceiver (1110), the first PSI report (708) to a network entity (102) in a lower layer channel container.

9. A computer-readable non-transitory storage medium (1120) comprising instructions which, when executed by at least one processor (1202) in a user equipment, UE, (104) to support positioning, cause the at least one processor, to:

   determine a plurality of positioning state information, PSI, report elements (702), wherein each PSI report element (702) comprises information related to positioning measurements performed by the UE (104);
   generate a first PSI report (708) based on the PSI report elements (702), wherein reporting at least one PSI report element (702) is postponed and the at least one PSI report element (702) is not included in the first PSI report (708), and wherein the first PSI report (708) comprises an indication of postponement (512) of the at least one PSI report element (702); and
   transmit the first PSI report (708) to a network entity (102) in a lower layer channel container.

10. A method performed by a network entity (102) in a wireless network (100) to support positioning of a user equipment, UE, (104), comprising:

   receiving from the UE (104) a first positioning state information, PSI, report (708) in a lower layer channel container, the first PSI report (708) containing PSI report elements (702) generated by the UE (104), wherein each PSI report element (702) comprises information related to positioning measurements performed by the UE (104), wherein the UE (104) postpones reporting at least one PSI report element (702) and the at least one PSI report element (702) is not included in the first PSI report (708) and the first PSI report (708) comprises an indication of postponement (512) of the at least one PSI report element (702); and
   processing the first PSI report (708) to determine the PSI report elements (702) included in the first PSI report (708) and that at least one PSI report element (702) is postponed.

11. The method of claim 10, further comprising:

   determining, in response to the indication of the postponement of the at least one PSI report element, a size of a second lower layer channel container for a second PSI report to contain the at least one PSI report element;
   transmitting to the UE a grant for the second lower layer channel container;
   receiving from the UE the second PSI report that contains the at least one PSI report element; and
   processing the second PSI report to determine the at least one PSI report element included in the second PSI report.

12. The method of claim 11, further comprising determining a position estimate for the UE based on the PSI report elements in the first PSI report and revising the position estimate for the UE based on the at least one PSI report element in the second PSI report.

13. The method of claim 11, further comprising waiting until after receiving the second PSI report to determine a position estimate for the UE based on the PSI report elements in the first PSI report combined with the at least one PSI report element in the second PSI report.

14. A network entity (102) in a wireless network (100) configured to support positioning of a user equipment, UE, (104), comprising:

an external interface (1210) configured to communicate with entities including the UE (104) in a wireless communication system (100);
at least one memory (1204);
at least one processor (1202) coupled to the external interface (1210) and the at least one memory (1204), wherein the at least one processor (1202) is configured to:

receive, via the external interface (1210), from the UE (104) a first positioning state information, PSI, report (708) in a lower layer channel container, the first PSI report (708) containing PSI report elements (702) generated by the UE (104), wherein each PSI report element (702) comprises information related to positioning measurements performed by the UE (104), wherein the UE (104) postpones reporting at least one PSI report element (702) and the at least one PSI report element (702) is not included in the first PSI report (708) and the first PSI report (708) comprises an indication of postponement (512) of the at least one PSI report element (702); and
process the first PSI report (708) to determine the PSI report elements (702) included in the first PSI report (708) and that at least one PSI report element (702) is postponed.

15. A computer-readable non-transitory storage medium (1204) comprising instructions which, when executed by at least one processor (1202) in a network entity (102) in a wireless network (100) to support positioning of a user equipment, UE, cause the at least one processor, to:

receive from the UE (104) a first positioning state information, PSI, report (708) in a lower layer channel container, the first PSI report (708) containing PSI report elements (702) generated by the UE (104), wherein each PSI report element (702) comprises information related to positioning measurements performed by the UE (104), wherein the UE (104) postpones reporting at least one PSI report element (702) and the at least one PSI report element (702) is not included in the first PSI report (708) and the first PSI report (708) comprises an indication of postponement (512) of the at least one PSI report element (702); and
process the first PSI report (708) to determine the PSI report elements (702) included in the first PSI report (708) and that at least one PSI report element (702) is postponed.

**Patentansprüche**

1. Verfahren, durchgeführt von einem UE (User Equipment) (104) zum Unterstützen der Ortung des UE (104), das Folgendes beinhaltet:

Bestimmen mehrerer PSI-(Positioning State Information)-Berichtselementen (702), wobei jedes PSI-Berichtselement (702) Informationen in Bezug auf von dem UE (104) durchgeführte Positionsmessungen umfasst;
Erzeugen eines ersten PSI-Berichts (708) auf der Basis der PSI-Berichtselemente (702), wobei das Berichten mindestens eines PSI-Berichtselements (702) aufgeschoben wird und das mindestens eine PSI-Berichtselement (702) nicht in den ersten PSI-Bericht (708) aufgenommen wird, und wobei der erste PSI-Bericht (708) eine Angabe der Aufschiebung (512) des mindestens einen PSI-Berichtselements (702) umfasst; und
Übertragen des ersten PSI-Berichts (708) zu einer Netzwerkentität (102) in einem Lower-Layer-Channel-Container.

2. Verfahren nach Anspruch 1, wobei die Angabe der Aufschiebung des mindestens einen PSI-Berichtselements ein Vollständigkeitsbit umfasst.

3. Verfahren nach Anspruch 1, wobei der erste PSI-Bericht ferner eine Identifizierung des mindestens einen PSI-Berichtselements umfasst, das aufgeschoben wird.

4. Verfahren nach Anspruch 1, wobei die Angabe der Aufschiebung des mindestens einen PSI-Berichtselements Gruppentyp-Vollständigkeitsbits umfasst, die die Aufschiebung verschiedener Gruppentypen von PSI-Berichtselementen identifizieren.

**5.** Verfahren nach Anspruch 1, das ferner Folgendes beinhaltet:

Empfangen von einer bedienenden Basisstation, als Reaktion auf die Angabe der Aufschiebung des mindestens einen PSI-Berichtselements, einer Gewährung für einen zweiten Lower-Layer-Channel-Container für einen zweiten PSI-Bericht, der das mindestens eine PSI-Berichts-Element enthält;
Erzeugen des zweiten PSI-Berichts, der das mindestens eine PSI-Berichtselement enthält; und
Übertragen des zweiten PSI-Berichts zu der Netzwerkentität im zweiten Lower-Layer-Channel-Container.

**6.** Verfahren nach Anspruch 1, das ferner Folgendes beinhaltet:

Ordnen der PSI-Berichtselemente gemäß prioritätsbasierten Regeln; und
Erzeugen des ersten PSI-Berichts auf der Basis der geordneten PSI-Berichtselemente, wobei das mindestens eine nicht im ersten PSI-Bericht enthaltene PSI-Berichtselement ein PSI-Berichtselement mit niedriger Priorität ist.

**7.** Verfahren nach Anspruch 1, wobei der Lower-Layer-Channel-Container entweder einen Physical-Layer-Channel-Container oder einen MAC-CE-(Medium Access Control - Control Element)-Block umfasst.

**8.** UE (User Equipment) (104), konfiguriert zur Unterstützung von Ortung, das Folgendes umfasst:

einen drahtlosen Transceiver (1110), konfiguriert zum drahtlosen Kommunizieren mit einer Netzwerkentität (102) in einem drahtlosen Kommunikationssystem;
mindestens einen Speicher (1104);
mindestens einen Prozessor (1202), der mit dem drahtlosen Transceiver (1110) und dem mindestens einen Speicher (1104) gekoppelt ist, wobei der mindestens eine Prozessor (1202) konfiguriert ist zum:

Bestimmen mehrerer PSI-(Positioning State Information)-Berichtselemente (702), wobei jedes PSI-Berichtselement (702) Informationen in Bezug auf von dem UE (104) durchgeführte Positionsmessungen umfasst;
Erzeugen eines ersten PSI-Berichts (708) auf der Basis der PSI-Berichtselemente (702), wobei das Berichten mindestens eines PSI-Berichtselements (702) aufgeschoben wird und das mindestens eine PSI-Berichtselement (702) nicht in den ersten PSI-Bericht (708) aufgenommen wird, und wobei der erste PSI-Bericht (708) eine Angabe der Aufschiebung (512) des mindestens einen PSI-Berichtselements (702) umfasst; und
Übertragen, über den drahtlosen Transceiver (1110), des ersten PSI-Berichts (708) zu einer Netzwerkentität (102) in einem Lower-Layer-Channel-Container.

**9.** Computerlesbares nichtflüchtiges Speichermedium (1120), das Befehle umfasst, die bei Ausführung durch mindestens einen Prozessor (1202) in einem UE (User Equipment) (104) zur Unterstützung von Ortung den mindestens einen Prozessor veranlassen zum:

Bestimmen mehrerer PSI-(Positioning State Information)-Berichtselemente (702), wobei jedes PSI-Berichtselement (702) Informationen in Bezug auf von dem UE (104) durchgeführte Positionsmessungen umfasst;
Erzeugen eines ersten PSI-Berichts (708) auf der Basis der PSI-Berichtselemente (702), wobei das Berichten mindestens eines PSI-Berichtselements (702) aufgeschoben wird und das mindestens eine PSI-Berichtselement (702) nicht in den ersten PSI-Bericht (708) aufgenommen wird, und wobei der erste PSI-Bericht (708) eine Angabe der Aufschiebung (512) des mindestens einen PSI-Berichtselements (702) umfasst; und
Übertragen des ersten PSI-Berichts (708) zu einer Netzwerkentität (102) in einem Lower-Layer-Channel-Container.

**10.** Verfahren, durchgeführt von einer Netzwerkentität (102) in einem drahtlosen Netzwerk (100) zum Unterstützen der Ortung eines UE (User Equipment) (104), das Folgendes beinhaltet:

Empfangen, von dem UE (104), eines ersten PSI-(Positioning Status Information)-Berichts (708) in einem Lower-Layer-Channel-Container, wobei der erste PSI-Bericht (708) von dem UE (104) erzeugte PSI-Berichtselemente (702) enthält, wobei jedes PSI-Berichtselement (702) Informationen in Bezug auf von dem UE (104) durchgeführte Positionsmessungen umfasst, wobei das UE (104) das Berichten mindestens eines PSI-Berichtselements (702) aufschiebt und das mindestens eine PSI-Berichtselement (702) nicht in den ersten PSI-Bericht (708) aufgenommen wird und der erste PSI-Bericht (708) eine Angabe der Aufschiebung (512) des mindestens einen PSI-Berichtselements (702) umfasst; und

Verarbeiten des ersten PSI-Berichts (708) zum Bestimmen der im ersten PSI-Bericht (708) enthaltenen PSI-Berichtselemente (702) und zum Feststellen, dass mindestens ein PSI-Berichtselement (702) aufgeschoben ist.

11. Verfahren nach Anspruch 10, das ferner Folgendes beinhaltet:

Bestimmen, als Reaktion auf die Angabe der Aufschiebung des mindestens einen PSI-Berichtselements, einer Größe eines zweiten Lower-Layer-Channel-Containers für einen zweiten PSI-Bericht, der das mindestens eine PSI-Berichtselement enthält;
Übertragen einer Gewährung für den zweiten Lower-Layer-Channel-Container zu dem UE;
Empfangen, von dem UE, des zweiten PSI-Berichts, der das mindestens eine PSI-Berichtselement enthält; und
Verarbeiten des zweiten PSI-Berichts zum Bestimmen des mindestens einen im zweiten PSI-Bericht enthaltenen PSI-Berichtselements.

12. Verfahren nach Anspruch 1, das ferner das Bestimmen einer Positionsschätzung für das UE auf der Basis der PSI-Berichtselemente im ersten PSI-Bericht und das Überarbeiten der Positionsschätzung für das UE auf der Basis des mindestens einen PSI-Berichtselements im zweiten PSI-Bericht beinhaltet.

13. Verfahren nach Anspruch 11, das ferner das Warten bis nach dem Empfang des zweiten PSI-Berichts mit dem Bestimmen einer Positionsschätzung für das UE auf der Basis der PSI-Berichtselemente im ersten PSI-Bericht in Kombination mit dem mindestens einen PSI-Berichtselement im zweiten PSI-Bericht beinhaltet.

14. Netzwerkentität (102) in einem drahtlosen Netzwerk (100), konfiguriert zum Unterstützen der Ortung eines UE (User Equipment) (104), die Folgendes umfasst:

eine externe Schnittstelle (1210), konfiguriert zum Kommunizieren mit Entitäten, einschließlich des UE (104), in einem drahtlosen Kommunikationssystem (100);
mindestens einen Speicher (1204);
mindestens einen Prozessor (1202), der mit der externen Schnittstelle (1210) und dem mindestens einen Speicher (1204) gekoppelt ist, wobei der mindestens eine Prozessor (1202) konfiguriert ist zum:

Empfangen, über die externe Schnittstelle (1210) von dem UE (104), eines ersten PSI-(Positioning Status Information)-Berichts (708) in einem Lower-Layer-Channel-Container, wobei der erste PSI-Bericht (708) von dem UE (104) erzeugte PSI-Berichtselemente (702) enthält, wobei jedes PSI-Berichtselement (702) Informationen in Bezug auf von dem UE (104) durchgeführte Positionsmessungen umfasst, wobei das UE (104) das Berichten mindestens eines PSI-Berichtselements (702) aufschiebt und das mindestens eine PSI-Berichtselement (702) nicht in den ersten PSI-Bericht (708) aufgenommen wird und der erste PSI-Bericht (708) eine Angabe der Aufschiebung (512) des mindestens einen PSI-Berichtselements (702) umfasst; und
Verarbeiten des ersten PSI-Berichts (708) zum Bestimmen der im ersten PSI-Bericht (708) enthaltenen PSI-Berichtselemente (702) und zum Feststellen, dass mindestens ein PSI-Berichtselement (702) aufgeschoben ist.

15. Computerlesbares nichtflüchtiges Speichermedium (1204), das Befehle umfasst, die bei Ausführung durch mindestens einen Prozessor (1202) in einer Netzwerkentität (102) in einem drahtlosen Netzwerk (100) zur Unterstützung der Ortung eines UE (User Equipment) den mindestens einen Prozessor veranlassen zum:

Empfangen, von dem UE (104), eines ersten PSI-(Positioning Status Information)-Berichts (708) in einem Lower-Layer-Channel-Container, wobei der erste PSI-Bericht (708) von dem UE (104) erzeugte PSI-Berichtselemente (702) enthält, wobei jedes PSI-Berichtselement (702) Informationen in Bezug auf von dem UE (104) durchgeführte Positionsmessungen umfasst, wobei das UE (104) das Berichten mindestens eines PSI-Berichtselements (702) aufschiebt und das mindestens eine PSI-Berichtselement (702) nicht in den ersten PSI-Bericht (708) aufgenommen wird und der erste PSI-Bericht (708) eine Angabe der Aufschiebung (512) des mindestens einen PSI-Berichtselements (702) umfasst; und
Verarbeiten des ersten PSI-Berichts (708) zum Bestimmen der im ersten PSI-Bericht (708) enthaltenen PSI-Berichtselemente (702) und zum Feststellen, dass mindestens ein PSI-Berichtselement (702) aufgeschoben ist.

**Revendications**

1. Procédé réalisé par un équipement utilisateur, UE, (104), pour prendre en charge un positionnement de l'UE (104), comprenant :

   la détermination d'une pluralité d'éléments de rapport d'informations d'état de positionnement, PSI, (702), dans lequel chaque élément de rapport de PSI (702) comprend des informations liées à des mesures de positionnement réalisées par l'UE (104) ;
   la génération d'un premier rapport de PSI (708) sur la base des éléments de rapport de PSI (702), dans lequel le rapport d'au moins un élément de rapport de PSI (702) est reporté et l'au moins un élément de rapport de PSI (702) n'est pas inclus dans le premier rapport de PSI (708), et dans lequel le premier rapport de PSI (708) comprend une indication de report (512) de l'au moins un élément de rapport de PSI (702) ; et
   la transmission du premier rapport de PSI (708) à une entité de réseau (102) dans un conteneur de canal de couche inférieure.

2. Procédé selon la revendication 1, dans lequel l'indication du report de l'au moins un élément de rapport de PSI comprend un bit de complétude.

3. Procédé selon la revendication 1, dans lequel le premier rapport de PSI comprend en outre l'identification de l'au moins un élément de rapport de PSI qui est reporté.

4. Procédé selon la revendication 1, dans lequel l'indication du report de l'au moins un élément de rapport de PSI comprend des bits de complétude de types de groupes qui identifient le report de différents types de groupes d'éléments de rapport de PSI.

5. Procédé selon la revendication 1, comprenant en outre :

   la réception à partir d'une station de base de service, en réponse à l'indication du report de l'au moins un élément de rapport de PSI, d'un octroi d'un second conteneur de canal de couche inférieure pour un second rapport de PSI contenant l'au moins un élément de rapport de PSI ;
   la génération du second rapport de PSI contenant l'au moins un élément de rapport de PSI ; et
   la transmission du second rapport de PSI à l'entité de réseau dans le second conteneur de canal de couche inférieure.

6. Procédé selon la revendication 1, comprenant en outre :

   la mise en ordre des éléments de rapport de PSI conformément à des règles de priorité ; et
   la génération du premier rapport de PSI sur la base des éléments de rapport de PSI ordonnés, dans lequel l'au moins un élément de rapport de PSI qui n'est pas inclus dans le premier rapport de PSI est un élément de rapport de PSI de faible priorité.

7. Procédé selon la revendication 1, dans lequel le conteneur de canal de couche inférieure comprend soit un conteneur de canal de couche physique, soit un bloc de commande d'accès au support - élément de commande, MAC-CE.

8. Équipement utilisateur (UE) (104) configuré pour prendre en charge un positionnement, comprenant :

   un émetteur-récepteur sans fil (1110) configuré pour communiquer sans fil avec une entité de réseau (102) dans un système de communication sans fil ;
   au moins une mémoire (1104) ;
   au moins un processeur (1202) couplé à l'émetteur-récepteur sans fil (1110) et à l'au moins une mémoire (1104), dans lequel l'au moins un processeur (1202) est configuré pour :

      déterminer une pluralité d'éléments de rapport d'informations d'état de positionnement (PSI) (702), dans lequel chaque élément de rapport de PSI (702) comprend des informations relatives à des mesures de positionnement réalisées par l'UE (104) ;
      générer un premier rapport de PSI (708) sur la base des éléments de rapport de PSI (702), dans lequel le rapport d'au moins un élément de rapport de PSI (702) est reporté et l'au moins un élément de rapport de PSI (702) n'est pas inclus dans le premier rapport de PSI (708), et dans lequel le premier rapport de PSI (708) comprend une indication de report (512) de l'au moins un élément de rapport (702) ; et

transmettre, par l'intermédiaire de l'émetteur-récepteur sans fil (1110), le premier rapport de PSI (708) à une entité de réseau (102) dans un conteneur de canal de couche inférieure.

9. Support de stockage non transitoire (1120) comprenant des instructions qui, une fois exécutées par au moins un processeur (1202) dans un équipement utilisateur, UE, (104) destiné à prendre en charge un positionnement, amène l'au moins un processeur à :

déterminer une pluralité d'éléments de rapport d'informations d'état de positionnement (PSI) (702), dans lequel chaque élément de rapport de PSI (702) comprend des informations relatives à des mesures de positionnement réalisées par l'UE (104) ;

générer un premier rapport de PSI (708) sur la base des éléments de rapport de PSI (702), dans lequel le rapport d'au moins un élément de rapport de PSI (702) est reporté et l'au moins un élément de rapport de PSI (702) n'est pas inclus dans le premier rapport de PSI (708), et dans lequel le premier rapport de PSI (708) comprend une indication de report (512) de l'au moins un élément de rapport de PSI (702) ; et

transmettre le premier rapport de PSI (708) à une entité de réseau (102) dans un conteneur de canal de couche inférieure.

10. Procédé réalisé par une entité de réseau (102) dans un réseau sans fil (100) pour prendre en charge un positionnement d'un équipement utilisateur, UE, (104), comprenant :

la réception à partir de l'UE (104) d'un premier rapport d'informations d'état de positionnement, PSI, (708) dans un conteneur de canal de couche inférieure, le premier rapport de PSI (708) contenant des éléments de rapport de PSI (702) générés par l'UE (104), dans lequel chaque élément de rapport de PSI (702) comprend des informations relatives à des mesures de positionnement réalisées par l'UE (104), dans lequel l'UE (104) reporte le rapport d'au moins un élément de rapport de PSI (702) et l'au moins un élément de rapport de PSI (702) n'est pas inclus dans le premier rapport de PSI (708) et le premier rapport de PSI (708) comprend une indication de report (512) de l'au moins un élément de rapport de PSI (702) ; et

le traitement du premier rapport de PSI (708) pour déterminer les éléments de rapport de PSI (702) inclus dans le premier rapport de PSI (708) et qu'au moins un élément de rapport de PSI (702) est reporté.

11. Procédé selon la revendication 10, comprenant en outre :

la détermination, en réponse à l'indication du report de l'au moins un élément de rapport de PSI, d'une taille d'un second conteneur de canal de couche inférieure pour un second rapport de PSI afin de contenir l'au moins un élément de rapport de PSI ;

la transmission à l'UE d'un octroi du second conteneur de canal de couche inférieure ;

la réception à partir de l'UE du second rapport de PSI qui contient l'au moins un élément de rapport de PSI ; et

le traitement du second rapport de PSI afin de déterminer l'au moins un élément de rapport de PSI inclus dans le second rapport de PSI.

12. Procédé selon la revendication 11, comprenant en outre la détermination d'une estimation de position de l'UE sur la base des éléments de rapport de PSI dans le premier rapport de PSI et la révision de l'estimation de position de l'UE sur la base de l'au moins un élément de rapport de PSI dans le second rapport de PSI.

13. Procédé selon la revendication 11, comprenant en outre l'attente de la réception du second rapport de PSI pour déterminer une estimation de position de l'UE sur la base des éléments de rapport de PSI dans le premier rapport de PSI combinés avec au moins un élément de rapport de PSI dans le second rapport de PSI.

14. Entité de réseau (102) dans un réseau sans fil (100) configurée pour prendre en charge le positionnement d'un équipement utilisateur, UE, (104), comprenant :

une interface externe (1210) configurée pour communiquer avec des entités comportant l'UE (104) dans un système de communication sans fil (100) ;

au moins une mémoire (1204) ;

au moins un processeur (1202) couplé à l'interface externe (1210) et à l'au moins une mémoire (1204), dans lequel l'au moins un processeur (1202) est configuré pour :

recevoir, par l'intermédiaire de l'interface externe (1210), à partir de l'UE (104) un rapport d'informations d'état de positionnement, PSI, (708) dans un conteneur de canal de couche inférieure, le premier rapport de PSI (708) contenant des éléments de rapport de PSI (702) générés par l'UE (104), dans lequel chaque élément de rapport de PSI (702) comprend des informations relatives à des mesures de positionnement réalisées par l'UE (104), dans lequel l'UE (104) reporte le rapport d'au moins un élément de rapport de PSI (702) et l'élément de rapport de PSI (702) n'est pas inclus dans le premier rapport de PSI (708) et le premier rapport de PSI (708) comprend une indication de report (512) de l'au moins un élément de rapport de PSI (702) ; et

traiter le premier rapport de PSI (708) pour déterminer les éléments de rapport de PSI (702) inclus dans le premier rapport de PSI (708) et qu'au moins un élément de rapport de PSI (702) est reporté.

15. Support de stockage non transitoire lisible par ordinateur (1204) comprenant des instructions qui, une fois exécutées par au moins un processeur (1202) dans une entité de réseau (102) dans un réseau sans fil (100) destinée à prendre en charge un positionnement d'un équipement utilisateur, UE, amène l'au moins un processeur à :

recevoir, à partir de l'UE (104) un premier rapport d'informations d'état de positionnement, PSI, (708) dans un conteneur de canal de couche inférieure, le premier rapport de PSI (708) contenant des éléments de rapport de PSI (702) générés par l'UE (104), dans lequel chaque élément de rapport de PSI (702) comprend des informations relatives à des mesures de positionnement réalisées par l'UE (104), dans lequel l'UE (104) reporte le rapport d'au moins un élément de rapport de PSI (702) et l'au moins un élément de rapport de PSI (702) n'est pas inclus dans le premier rapport de PSI (708) et le premier rapport de PSI (708) comprend une indication de report (512) de l'au moins un élément de rapport de PSI (702) ; et

traiter le premier rapport de PSI (708) pour déterminer les éléments de rapport de PSI (702) inclus dans le premier rapport de PSI (708) et qu'au moins un élément de rapport de PSI (702) est reporté.

FIG. 1

*FIG. 2A*

*FIG. 2B*

FIG. 3

**FIG. 4**

500 ⌐

⌐502

⌐104

PSI Report

Network
Entity

510⌐

⌐504          506⌐

| Fixed | Variable | |
|-------|----------|---|

512          514⌐    ⌐512

**FIG. 5**

600 ⌐

⌐602

⌐104

PSI Report

Network
Entity

610⌐

⌐604          606⌐

| | Fixed | Variable | |
|---|-------|----------|---|

612a⌐          612a⌐
612b⌐          612b⌐
612c⌐          612c⌐
612d⌐          612d⌐

**FIG. 6**

FIG. 7

800 ⟶

104  804  102-1  102-2  102-3  802

| UE | UE | Serving Base Station | RAN Base Station | Location Server | 801 |

1. Priority Configuration

2. DL PRS

3. DL PRS

4. UL PRS

5. Positioning Measurements

6. Schedule Lower Layer Container

7. Generate PSI Report Elements

8. Generate PSI Report With Indication(s) of Postponement

9. Transmit PSI Report in Lower Layer Channel Container

| 10a. Process PSI Report | 10b. Process PSI Report | 10c. Process PSI Report |

11. Propagate Indication of Postponed PSI Report Elements

12. Schedule Lower Layer Container for Remaining PSI Report Elements

13. Generate PSI Report with Postponed PSI Report Elements

14. Transmit PSI Report in Lower Layer Channel Container

| 15a. Process PSI Report | 15b. Process PSI Report | 15c. Process PSI Report |

**FIG. 8**

**900**

**902**

Determine a plurality of positioning state information (PSI) report elements, wherein each PSI report element comprises information related to positioning measurements performed by the UE

**904**

Generate a first PSI report based on the PSI report elements, wherein reporting at least one PSI report element is postponed and the at least one PSI report element is not included in the first PSI report, and wherein the first PSI report comprises an indication of postponement of the at least one PSI report element

**906**

Transmit the first PSI report to a network entity in a lower layer channel container

*FIG. 9*

**1000**

**1002**

Receive from the UE a first positioning state information (PSI) report in a lower layer channel container, the first PSI report containing PSI report elements generated by the UE, wherein each PSI report element comprises information related to positioning measurements performed by the UE, wherein the UE postpones reporting at least one PSI report element and the at least one PSI report element is not included in the first PSI report and the first PSI report comprises an indication of postponement of the at least one PSI report element

**1004**

Process the first PSI report to determine the PSI report elements included in the first PSI report and that at least one PSI report element is postponed

*FIG. 10*

1111

1100

WWAN Transceiver 1110

1112

1114

Connections(s) 1106

Medium
1120

1108

UL PRS
1122

DL PRS
1124

Position Measurement
1126

PSI Report Element
1128

Priority Config
1130

Config Priority Rules
1132

Scheduling
1134

Ordering
1136

Postponement
1138

PSI Report
1140

Transmit PSI Report
1142

Processor(s)
1102

Memory
1104

*FIG. 11*

1211

1200

Transceiver 1210

1212

1214

Connections(s) 1206

Communications
Interface
1216

Medium
1220

1208

UL PRS
1222

DL PRS
1224

Scheduling
1226

Receive PSI Report
1228

Priority Config
1230

Process PSI Report
1232

Position Determination
1234

Processor(s)
1202

Memory
1204

*FIG. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GR 20200100157
- US 2019059101 A
- US 20140370914 A